# EUROPEAN PATENT APPLICATION

(11) **EP 4 550 525 A1**
(43) Date of publication of application: **07.05.2025**
(21) Application number: 23845660.2
(22) Date of filing: 27.07.2023
(51) Int. Cl.: H01M 10/613, H01M 10/625, H01M 10/6556, H01M 10/6561, H01M 10/6567

(54) **HEAT EXCHANGE PLATE, BATTERY PACK AND VEHICLE**

(30) Priority: 29.07.2022 CN 202210911342; 31.10.2022 CN 202222892882 U
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); HUANG, Wei, Shenzhen, Guangdong 518118 (CN); MA, Rui, Shenzhen, Guangdong 518118 (CN); QUE, Yansheng, Shenzhen, Guangdong 518118 (CN)
(74) Representative: Taor, Simon Edward William
(86) International application number: PCT/CN2023/109652
(87) International publication number: WO 2024/022455

(57) **Abstract**

A heat exchange plate (2), a battery pack and a vehicle. The heat exchange plate (2) comprises a heat exchange area (203) and a battery area (204), the heat exchange area (203) being arranged around the battery area (204); and a flow channel (21), wherein the flow channel (21) is arranged in the heat exchange plate (2), and is configured to allow a heat exchange working medium to flow therein, a first flow channel (100) is located in the heat exchange area (203), and second flow channels (200, 300, 400) are distributed in the battery area (204).

## Description

### CROSS-REFERENCE TO RELATED APPLICATIONS

The present disclosure is proposed based on Chinese Patent Application No. 202210911342.3 filed on July 29, 2022 and Chinese Patent Application No. 202222892882.X filed on October 31, 2022, and claims priority to and benefits of these Chinese Patent Applications. The entire content of the above-referenced applications is incorporated herein by reference.

### FIELD

The present disclosure belongs to the technical field of battery components, and specifically, relates to a heat exchange plate, a battery pack, and a vehicle.

### BACKGROUND

As people become more aware of environmental protection, more and more electric vehicles have appeared. As core power components in electric vehicles, batteries are critical for long-term and stable operation of the electric vehicles.

In the related art, water passes through a harmonica tube to cool or heat a battery. However, because an area for arranging a heat exchange component such as the harmonica tube is small, the heat exchange component can exchange heat only for the middle of the battery. As a result, a temperature of the edge of the battery is prone to be excessively high or low, reducing the stability and service life of the battery.

### SUMMARY

One objective of embodiments of the present disclosure is to provide new technical solutions of a heat exchange plate, a battery pack, and a vehicle.

According to a first aspect of the embodiments of the present disclosure, a heat exchange plate is provided, applied to a battery, including:
a heat exchange region and a battery region, the heat exchange region being arranged around the battery region, and the battery region being a battery projection region of the battery on the heat exchange plate; and
a flow channel, the flow channel being arranged in the heat exchange plate, the flow channel being configured to allow a heat exchange working medium to flow therein, and the flow channel including a first-type flow channel and a second-type flow channel;
the first-type flow channel being located in the heat exchange region, and the second-type flow channel being distributed in the battery region.

Optionally, a length of the first-type flow channel is less than a length of the second-type flow channel, and/or a number of diverging times of the first-type flow channel is less than a number of diverging times of the second-type flow channel.

Optionally, the heat exchange plate further includes a first terminal and a second terminal;
one end of the first-type flow channel is connected to the first terminal, and another end of the first-type flow channel is connected to the second terminal; and
one end of the second-type flow channel is connected to the first terminal, and another end of the second-type flow channel is connected to the second terminal.

Optionally, the first-type flow channel diverges at least once and diverges at most four times when extending from the first terminal to the second terminal.

Optionally, the second-type flow channel diverges at least twice and diverges at most six times when extending from the first terminal to the second terminal.

Optionally, the flow channel includes a plurality of trunks, a plurality of stages of branches, and a plurality of stages of flow diverging/converging junctions, and the flow diverging/converging junction diverges or converges the flow channel according to a flow direction of the working medium;
the trunk includes a plurality of first trunks and second trunks, the first trunk is connected to the first terminal, and the second trunk is connected to the second terminal;
one of the first trunks passes through a first-stage flow diverging/converging junction to form two first-stage branches, one first-stage branch passes through a second-stage flow diverging/converging junction to form two second-stage branches and extend into the heat exchange region, and the two second-stage branches serve as the first-type flow channel; and
one end of the two second-stage branches away from the first trunk is connected to one of the second trunks through flow converging.

Optionally, another first-stage branch formed after one of the first trunks passes through the first-stage flow diverging/converging junction extends into the battery region, and the first-stage branch and the branch formed after the first-stage branch passes through the flow diverging/converging junction are the second-type flow channel.

Optionally, the second-stage branch serving as the first-type flow channel passes through the second-stage flow diverging/converging junction in a position close to the second trunk to form the first-stage branch, the first-stage branch and another first-stage branch serving as the second-type flow channel are connected to one of the second trunks through the first-stage flow diverging/converging junction, and the first-stage flow diverging/converging junction and the second-stage flow diverging/converging junction are arranged adjacent to each other.

Optionally, in a position close to the second trunk, the second-stage flow diverging/converging junction connected to the second-stage branch serving as the first-type flow channel and the second-stage flow diverging/converging junction connected to the second-stage branch serving as the second-type flow channel are arranged adjacent to each other.

Optionally, the heat exchange plate has a first-type region and a second-type region; the flow channel is distributed in the first-type region and the second-type region; and the heat exchange plate is configured to cool the battery, and the working medium flows from a flow channel of the first-type region to a flow channel of the second-type region (27); or the heat exchange plate is configured to heat the battery, and the working medium flows from a flow channel of the second-type region to a flow channel of the first-type region.

Optionally, the first-type region includes a first partition and a second partition; and when the heat exchange plate is configured to cool the battery, the working medium diverges at least twice in a process of flowing from the first partition to the second-type region.

Optionally, the first partition of the first-type region includes a second sub-region, and the second partition of the first-type region includes a second sub-zone; and the second-type region includes a second partition region, and the second partition region is located between the second sub-zone and the second sub-region.

Optionally, the heat exchange plate has a first region and a second region, the flow channel is distributed in the first region and the second region, and average distribution density of the flow channel in the first region is greater than average distribution density of the flow channel in the second region.

Optionally, the heat exchange plate includes a flow channel plate and a base plate, the flow channel is arranged on the flow channel plate, and in a plane where the heat exchange plate is located, an area for arranging the flow channel is larger than 70% of an area of the flow channel plate.

Optionally, a width of the flow channel is less than 15mm.

According to a second aspect of the embodiments of the present disclosure, a battery pack is provided, including:
the heat exchange plate according to the first aspect; and
a battery module, the heat exchange plate covering the battery module, and the battery module being located in a position corresponding to the battery region.

Optionally, the battery module includes a first module and a second module, the first module and the second module are arranged side by side, and the heat exchange region of the heat exchange plate surrounds the entire periphery of the first module and the second module.

According to a third aspect of the embodiments of the present disclosure, a vehicle is provided, including the heat exchange plate according to the first aspect, or
including the battery pack according to the second aspect.

A technical effect of the present disclosure is as follows:
The embodiments of the present disclosure provide a heat exchange plate, including a heat exchange region and a battery region, the heat exchange region being arranged around the battery region; and a flow channel, the flow channel being arranged in the heat exchange plate, the flow channel being configured to allow a heat exchange working medium to flow therein, the first-type flow channel being located in the heat exchange region, and the second-type flow channel being located in the battery region. When the first-type flow channel surrounds the battery region and is located in the periphery of the battery projection region, the first-type flow channel can not only exchange heat for the region around the battery, but also ensure heat exchange of the heat exchange plate for the entire battery and improve the heat exchange efficiency of the heat exchange plate.

Other features and advantages of the present disclosure will become apparent from the following detailed description of exemplary embodiments of the present disclosure with reference to the accompanying drawings.

### BRIEF DESCRIPTION OF THE DRAWINGS

Accompanying drawings are incorporated into and constitute a part of this specification, show embodiments that conform to the present disclosure, and are used together with this specification to describe the principle of the present disclosure.
FIG. 1 is a first schematic diagram of partitioning a heat exchange plate according to an embodiment of the present disclosure;
FIG. 2 is a second schematic diagram of partitioning a heat exchange plate according to an embodiment of the present disclosure;
FIG. 3 is a top view of a battery pack according to an embodiment of the present disclosure;
FIG. 4 is a schematic diagram of the entirety of a heat exchange plate according to an embodiment of the present disclosure;
FIG. 5 is a schematic diagram of an inlet and outlet assembly of a heat exchange plate according to an embodiment of the present disclosure;
FIG. 6 is a schematic diagram of matching between a battery core and a heat exchange plate of a battery pack according to an embodiment of the present disclosure;
FIG. 7 is a schematic diagram of a flow direction of a flow channel of a heat exchange plate according to an embodiment of the present disclosure;
FIG. 8 is a schematic diagram of a flow diverging junction of a heat exchange plate according to an embodiment of the present disclosure;
FIG. 9 is a schematic diagram of a trunk of a heat exchange plate according to an embodiment of the present disclosure;
FIG. 10 is a schematic diagram of a branch in a first heat exchange module of a heat exchange plate according to an embodiment of the present disclosure;
FIG. 11 is a schematic diagram of a branch in a second heat exchange module of a heat exchange plate according to an embodiment of the present disclosure;
FIG. 12 is a top view of splitting a battery structure according to an embodiment of the present disclosure;
FIG. 13 is a schematic diagram of partitioning a heat exchange plate according to an embodiment of the present disclosure;
FIG. 14 is a first schematic diagram of a flow direction (a) of a flow channel and a partition (b) of a heat exchange plate according to an embodiment of the present disclosure;
FIG. 15 is a second schematic diagram of a flow direction (a) of a flow channel and a partition (b) of a heat exchange plate according to an embodiment of the present disclosure;
FIG. 16 is a schematic diagram of a base plate and a flow channel plate; and
FIG. 17 is a schematic diagram of a direction change junction of a heat exchange plate according to an embodiment of the present disclosure.

### DETAILED DESCRIPTION

Various exemplary embodiments of the present disclosure are now described in detail with reference to the accompanying drawings. It should be noted: unless otherwise specified, opposite arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but where appropriate, the techniques, the methods, and the devices should be considered as a part of the specification.

In all examples shown and discussed herein, any specific value should be construed as merely exemplary and not as limitations. Therefore, other examples of exemplary embodiments may have different values.

It should be noted: similar reference numerals and letters refer to similar items in the following accompanying drawings. Therefore, once an item is defined in one accompanying drawing, the item does not need to be further discussed in subsequent accompanying drawings.

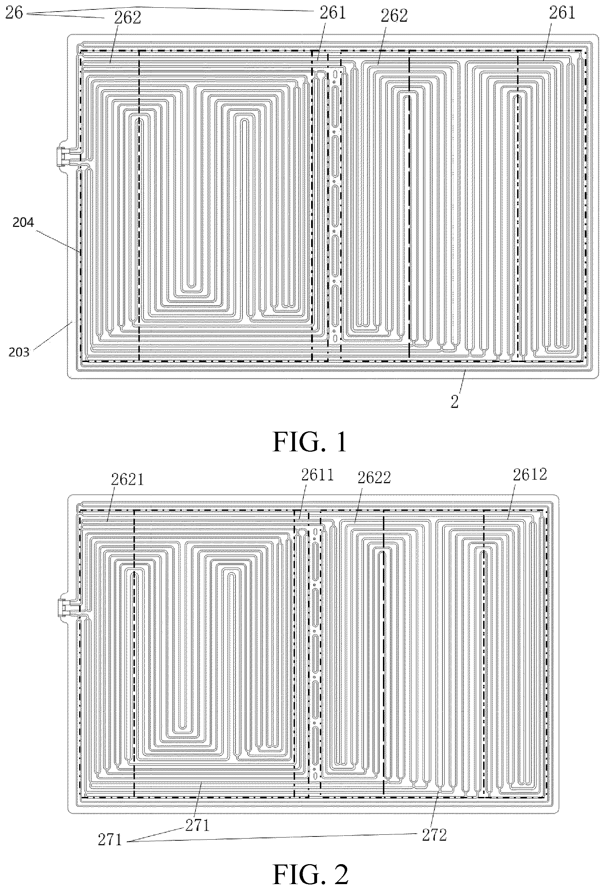

Referring to FIG. 1 to FIG. 5, an embodiment of the present disclosure provides a heat exchange plate, applied to a battery. The heat exchange plate includes:
a heat exchange region 203 and a battery region 204, the heat exchange region being arranged around the battery region, and the battery region being a battery projection region of the battery on the heat exchange plate; and
a flow channel 21, the flow channel 21 being arranged in the heat exchange plate, the flow channel being configured to allow a heat exchange working medium to flow therein, and the flow channel including a first-type flow channel 100 and a second-type flow channel.

The first-type flow channel 100 is located in the heat exchange region 203, and the second-type flow channel is distributed in the battery region 204.

Specifically, when the flow channel 21 extends in the heat exchange plate, outermost first-type flow channels 100 basically no longer diverge after diverging once or twice, circle around the outer edge of the heat exchange plate once, and finally converge again at a position close to a flow channel outlet. These flow channels are configured to balance the temperature of the working medium at the end of the flow. Especially, when a phase-change refrigerant working medium is used, these flow channels can play a better role. A volume of the working medium after phase change changes greatly, which is prone to problems such as accumulation, poor circulation, and temperature concentration. This problem is more likely to be very severe at the flow converging end. The working medium in the circling outermost flow channel diverges fewer times, so that the working medium in the outermost flow channel has relatively small phase change, and can be configured to balance the temperature and phase state of the working medium in other flow channels at the end of the entire circulation. This ensures the smoothness and evenness of the overall circulation.

When the first-type flow channel 100 surrounds the battery region and is located in the periphery of the battery projection region, the first-type flow channel can not only exchange heat for the region around the battery, but also ensure heat exchange of the heat exchange plate for the entire battery and improve the heat exchange efficiency of the heat exchange plate.

The first-type flow channel 100 can be used as a first circulation flow channel in the heat exchange plate. In the middle of the heat exchange plate, the second-type flow channel including a second circulation flow channel, a third circulation flow channel, and a fourth circulation flow channel can also be formed, to improve the heat exchange balance of the heat exchange plate.

Optionally, a length of the first-type flow channel is smaller than a length of the second-type flow channel; and/or
a number of diverging times of the first-type flow channel is less than a number of diverging times of the second-type flow channel.

Specifically, the first-type flow channel 100 is located in the heat exchange region 203, that is, the first-type flow channel 100 circles around the outer edge of the heat exchange plate, so that the second-type flow channel is located inside the first-type flow channel 100. However, after the first-type flow channel 100 diverges once or twice, the first-type flow channel basically no longer diverges. Besides, the number of diverging times of the first-type flow channel 100 is small, but the second-type flow channel needs to diverge and change a direction multiple times in the heat exchange plate, so that the flow channel is evenly distributed in the heat exchange plate. Therefore, the length of the first-type flow channel is shorter than the length of the second-type flow channel, and the number of diverging times of the first-type flow channel is less than the number of diverging times of the second-type flow channel, to ensure the balance of flow channel distribution in the heat exchange plate.

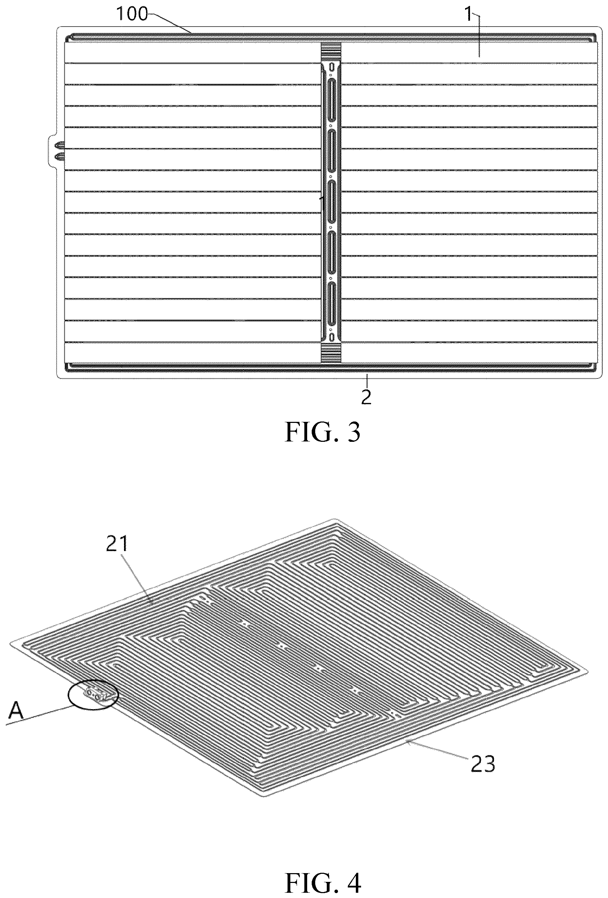

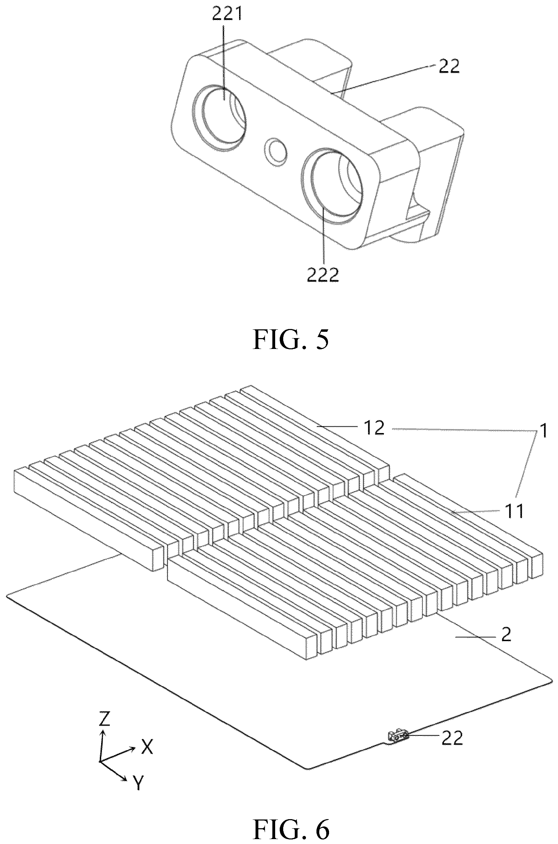

Optionally, referring to FIG. 4 and FIG. 5,
the heat exchange plate further includes a first terminal 221 and a second terminal 222.

One end of the first-type flow channel is connected to the first terminal 221, and another end of the first-type flow channel is connected to the second terminal 222.

One end of the second-type flow channel is connected to the first terminal 221, and another end of the second-type flow channel is connected to the second terminal.

Specifically, when the heat exchange plate 2 exchanges heat for the battery, the first-type region 26 on the heat exchange plate 2 can correspond to a post region of the battery to ensure the heat exchange effect of the heat exchange plate 2 for the battery. The actual structure of the battery may be composed of a group of battery cores, or may be composed of multiple groups of arranged battery cores. For example, referring to FIG. 6, when the heat exchange plate 2 exchanges heat for a battery composed of two groups of battery cores, the heat exchange plate 2 can be divided into a first heat exchange module and a second heat exchange module. The first heat exchange module corresponds to one group of battery cores, and the second heat exchange module corresponds to another group of battery cores. In addition, at least a part of the flow channel 21 is curved in each of the first heat exchange module and the second heat exchange module, so that an area for arranging the flow channel 21 in the first heat exchange module and the second heat exchange module can be increased. Therefore, this increases the effective heat exchange area of the heat exchange plate 2 and the heat exchange amount of the heat exchange plate 2 for the battery.

Specifically, when the first-type flow channel 100 is configured to exchange heat in the region around the battery, one end of the first-type flow channel is connected to the first terminal 221, and another end of the first-type flow channel is connected to the second terminal. Therefore, the working medium in the flow channel can flow into the first-type flow channel from the first terminal 221 or the second terminal 222, and extend in the first-type flow channel and then flow out of the first-type flow channel from the second terminal 222 or the first terminal 221, so as to ensure that the temperature around the battery is within an appropriate range.

When the second-type flow channel is configured to exchange heat in the middle of the battery, one end of the second-type flow channel is connected to the first terminal 221, and another end of the second-type flow channel is connected to the second terminal. Therefore, the working medium in the flow channel can flow into the second-type flow channel from the first terminal 221 or the second terminal 222, and bend and extend in the second-type flow channel and then flow out of the second-type flow channel from the second terminal 222 or the first terminal 221, so as to ensure that the temperature in the middle of the battery is stable.

Optionally, the first-type flow channel 100 diverges at least once and diverges at most four times when extending from the first terminal 221 to the second terminal 222.

Specifically, referring to FIG. 1 and FIG. 2, the heat exchange plate includes a first heat exchange module and a second heat exchange module, and both the first heat exchange module and the second heat exchange module include the first-type region 26. The first-type region 26 of the first heat exchange module includes a first sub-zone 2621 and a first sub-region 2611, and the first-type region 26 of the second heat exchange module includes a second sub-zone 2622 and a second sub-region 2612.

Along a direction from the first terminal 221 to the second terminal 222, the first circulation flow channel 100 extends to pass through the first sub-zone 2621, the first partition region 271, the first sub-region 2611, and the second sub-zone 2622, the second partition region 272, and the second sub-region 2612 in sequence, and then along the edge of the heat exchange plate, extends back to pass through the second partition region 272, the second sub-zone 2622, the first sub-region 2611, the first partition region 271, and the first sub-zone 2621.

Specifically, along the direction from the first terminal 221 to the second terminal 222, the first circulation flow channel 100 diverges for the first time when extending to pass through the first sub-zone 2621 for the first time, and converges for the first time when extending to pass through the first sub-zone 2621 for the second time.

In addition, the first-type region 26 may include a first partition 261 and a second partition 262. The first partition 261 includes the first sub-region 2611 and the second sub-region 2612, and the second partition 262 includes the first sub-zone 2621 and the second sub-zone 2622.

Optionally, the second-type flow channel diverges at least twice and diverges at most six times when extending from the first terminal 221 to the second terminal 222.

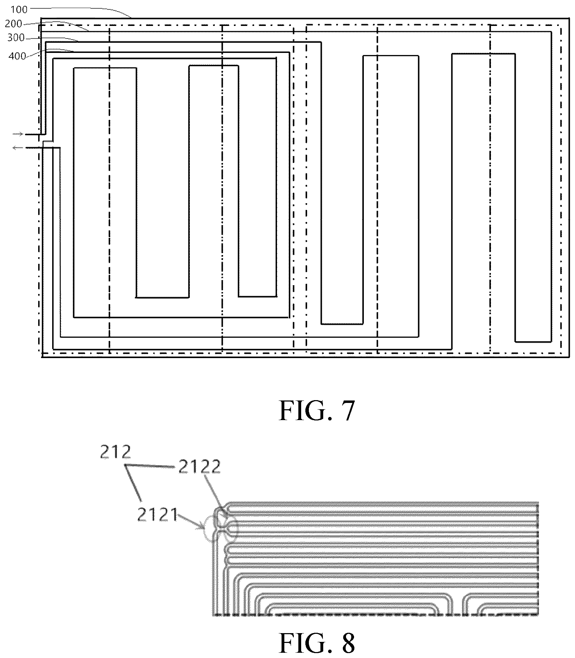

Specifically, referring to FIG. 7, the second-type flow channel may include a second circulation flow channel 200, a third circulation flow channel 300, and a fourth circulation flow channel 400.

In the second circulation flow channel 200, along the direction from the first terminal 221 to the second terminal 222, the second circulation flow channel 200 extends from the first terminal 221 to the second sub-region 2612 along the edge of the heat exchange plate, bends and extends in the second sub-region 2612 and the second partition region 272, and then extends back to the second terminal 222 along the edge of the heat exchange plate.

Specifically, along the direction from the first terminal 221 to the second terminal 222, the second circulation flow channel extends from the first terminal 221 to pass through the first sub-zone 2621, the first partition region 271, the first sub-region 2611, the second sub-zone 2622, the second partition region 272, and the second sub-region 2612 in sequence, and then the second circulation flow channel bends and extends in the second sub-region 2612 and the second partition region 272, and further extends to pass through the second sub-zone 2622, the first sub-region 2611, the first partition region 271, and the first sub-zone 2621 in sequence to return to the second terminal 222.

The second circulation flow channel changes a direction six times in the second sub-region 2612 and the second partition region 272.

Specifically, the second circulation flow channel diverges for the first time when extending to pass through the first sub-zone 2621 for the first time, diverges for the second time and the third time in the second sub-region 2612, converges for the first time when extending back to the second terminal 222 from the second partition region 272, and converges for the second time and the third time when extending to pass through the first sub-zone 2621 for the second time.

In the third circulation flow channel 300, along the direction from the first terminal 221 to the second terminal 222, the third circulation flow channel extends from the first terminal 221 to the second sub-zone 2622 along the edge of the heat exchange plate, bends and extends in the second sub-zone 2622 and the second partition region 272, and then extends back to the second terminal 222 along the edge of the heat exchange plate.

Specifically, along the direction from the first terminal 221 to the second terminal 222, the third circulation flow channel extends from the first terminal 221 to pass through the first sub-zone 2621, the first partition region 271, the first sub-region 2611, and the second sub-zone 2622 in sequence, and then the third circulation flow channel bends and extends in the second sub-zone 2622 and the second partition region 272, and further extends to pass through the second sub-zone 2622, the first sub-region 2611, the first partition region 271, and the first sub-zone 2621 in sequence to return to the second terminal 222.

The third circulation flow channel changes a direction four times in the second sub-zone 2622.

Specifically, along the direction from the first terminal 221 to the second terminal 222, the third circulation flow channel diverges for the first time when passing through the first sub-zone 2621 for the first time, diverges for the second time and the third time when extending to pass through the second sub-zone 2622 for the first time, converges for the first time and the second time in the second partition region 272, and converges for the third time and the fourth time when extending to pass through the first sub-zone 2621 for the second time.

Along the direction from the first terminal 221 to the second terminal 222, the fourth circulation flow channel 400 extends from the first terminal 221 to pass through the first sub-zone 2621, the first partition region 271, and the first sub-region 2611 in sequence, then extends back to pass through the first partition region 271 and extends to the first sub-zone 2621, and then bends and extends to enter the first partition region 271 and the first sub-region 2611, and finally the fourth circulation flow channel extends back to pass through the first partition region 271 again and extends to the first sub-zone 2621 to return to the second terminal 222.

In a process in which the fourth circulation flow channel bends and extends to enter the first partition region 271 and the first sub-region 2611, the fourth circulation flow channel changes a direction at least eight times.

Specifically, the fourth circulation flow channel diverges for the first time when extending to pass through the first sub-zone 2621 for the first time, diverges for the second time and the third time when extending to pass through the first sub-region 2611 for the first time, diverges for the fourth time when extending to pass through the first sub-zone 2621 for the second time, and converges for the first time and the second time when extending to pass through the first sub-region 2611 for the second time, and converges for the third time and the fourth time when extending to pass through the first sub-zone 2621 for the third time.

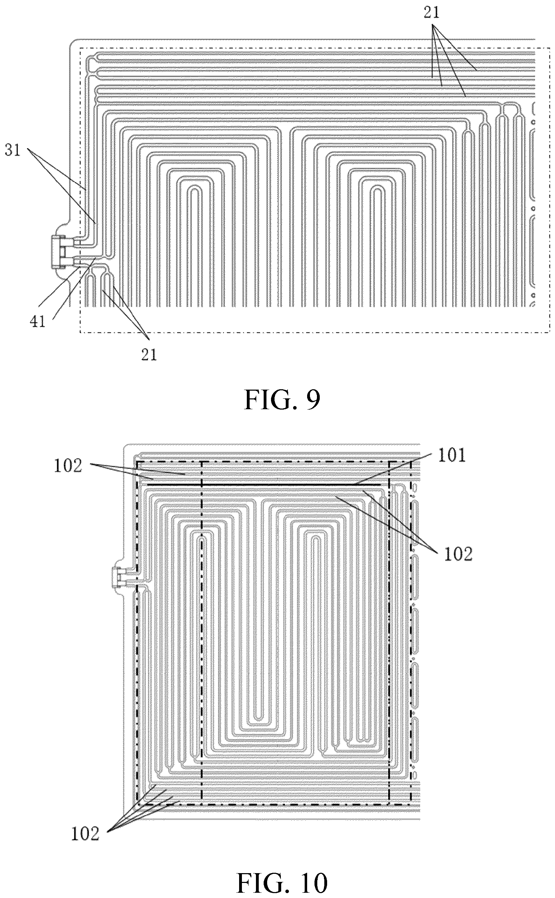

In an embodiment, referring to FIG. 8 to FIG. 11, the flow channel includes a plurality of trunks, a plurality of stages of branches, and a plurality of stages of flow diverging/converging junctions, and the flow diverging/converging junction diverges or converges the flow channel according to a flow direction of the working medium.

The trunk includes a plurality of first trunks 31 and second trunks 41, the first trunk 31 is connected to the first terminal, and the second trunk 41 is connected to the second terminal.

One of the first trunks 31 passes through a first-stage flow diverging/converging junction 2121 to form two first-stage branches 101, one first-stage branch 101 passes through a second-stage flow diverging/converging junction 2122 to form two second-stage branches 102 and extend into the heat exchange region, and the two second-stage branches 102 serve as the first-type flow channel, and the first-stage flow diverging/converging junction 2121 and the second-stage flow diverging/converging junction 2122 form a flow diverging junction 212.

One end of the two second-stage branches 102 away from the first trunk 31 is connected to one of the second trunks 41 through flow converging.

In an embodiment, another first-stage branch 101 formed after one of the first trunks 31 passes through the first-stage flow diverging/converging junction 2121 extends into the battery region, and the first-stage branch 101 and the branch formed after the first-stage branch passes through the flow diverging/converging junction are the second-type flow channel.

Besides, a branch formed after another first trunk 31 passes through the second-stage flow diverging/converging junction 2122 extends into the battery region, and the branch can also be the second-type flow channel.

Optionally, the second-stage branch 102 serving as the first-type flow channel passes through the second-stage flow diverging/converging junction 2122 in a position close to the second trunk 41 to form the first-stage branch 101, the first-stage branch 101 and another first-stage branch 101 serving as the second-type flow channel are connected to one of the second trunks 41 through the first-stage flow diverging/converging junction 2121, and the first-stage flow diverging/converging junction 2121 and the second-stage flow diverging/converging junction 2122 are arranged adjacent to each other, to reduce the temperature and volume difference caused by phase change of the working medium and improve the energy utilization in the heat exchange plate.

Optionally, in a position close to the second trunk 41, the second-stage flow diverging/converging junction 2122 connected to the second-stage branch 102 serving as the first-type flow channel and the second-stage flow diverging/converging junction 2122 connected to the second-stage branch 102 serving as the second-type flow channel are arranged adjacent to each other, which can also reduce the temperature and volume difference caused by phase change of the working medium and improve the energy utilization in the heat exchange plate.

An embodiment of the present disclosure provides a battery tray, including:
the heat exchange plate; and
a battery module, the heat exchange plate covering the battery module, and the battery module being located in a position corresponding to the battery region.

Specifically, the battery module is located at a position corresponding to the battery region. When the first-type flow channel 100 surrounds the battery region and is located in the periphery of the battery projection region, the first-type flow channel can not only exchange heat for the region around the battery module, but also ensure heat exchange of the heat exchange plate for the entire battery. In the middle of the heat exchange plate, the second-type flow channel including the second circulation flow channel, the third circulation flow channel, and the fourth circulation flow channel is configured to exchange heat for most of the battery module, to improve heat exchange balance of the heat exchange plate.

Optionally, the battery module includes a first battery module and a second battery module, the first battery module and the second battery module are arranged side by side, and the heat exchange region of the heat exchange plate surrounds the entire periphery of the first battery module and the second battery module.

Specifically, referring to FIG. 6, the battery pack includes the heat exchange plate 2 and multiple battery cores 1. Two ends of each battery core 1 are provided with posts. The multiple battery cores are arranged along a first direction, and the first direction may be an X direction in FIG. 1, to increase the energy density of the battery pack. The heat exchange plate is arranged on one or two sides of the battery core along a second direction. The second direction may be a Z direction in FIG. 1. Side faces of the multiple battery cores 1 along the second direction form a large surface of the battery cores 1. The heat exchange plate is arranged close to one or two large surfaces of the battery core 1, which can ensure the heat exchange effect of the heat exchange plate for the battery core.

In addition, the multiple battery cores 1 may form a first battery module 11 and a second battery module 12. The second battery module 12 is located on a side of the first battery module 11 away from an inlet and outlet assembly 22, and a first terminal 221 and a second terminal 222 are located on the inlet and outlet assembly 22. The first battery module 11 may correspond to the first heat exchange module on the heat exchange plate, and the second battery module 12 may correspond to the second heat exchange module on the heat exchange plate.

Specifically, the flow channel of the first-type region 26 may be opposite to the first battery module 11 and may be close to the inlet and outlet assembly 22, that is, the flow channel of the first-type region 26 is located at a near end of the heat exchange plate. The flow channel 21 of the second-type region 27 can be far away from the inlet and outlet assembly 22, that is, the flow channel of the second-type region 27 is located at a far end of the heat exchange plate. To ensure the balanced heat exchange effect of the near end and the far end of the heat exchange plate, a flow amount of the flow channel 21 at the far end can be increased, for example, a flow amount of a channel in the flow channel 21 opposite to the second battery module 12 is set to a second flow amount, and a first flow amount is smaller than the second flow amount.

Optionally, a direction in which posts at the two ends of the battery core are connected is a third direction. The third direction can be a Y direction in FIG. 1. That is, each battery core 1 can extend along the third direction to form a long strip battery core. The first direction, the second direction, and the third direction may be parallel to a width direction, a height direction, and a length direction of the battery core 1 respectively. When the first direction, the second direction, and the third direction are perpendicular to each other, the multiple battery cores 1 can form a compact battery pack structure to ensure the energy density of the battery pack.

Optionally, the heat exchange plate is a bottom plate or an upper cover.

Specifically, the heat exchange plate can be arranged on one side or two sides of the battery core along the second direction. When the heat exchange plate can be arranged on one side of the battery core along the second direction, for example, when the heat exchange plate is arranged on the bottom side of the multiple battery cores, the heat exchange plate can form the bottom plate of the battery pack. On the one hand, it can ensure the heat exchange effect for the battery core when the heat exchange plate is in contact with the battery core. On the other hand, the battery pack can be well protected when the bottom of the battery pack is impacted. When the heat exchange plate is arranged on the top side of the multiple battery cores, the heat exchange plate can form the upper cover of the battery pack. Similarly, it can ensure the heat exchange effect for the battery core when the heat exchange plate is in contact with the battery core. On the other hand, the battery pack can be protected.

An embodiment of the present disclosure provides a vehicle, including the heat exchange plate, or
including the battery pack.

This technical solution further provides a heat exchange flow channel device that can be used on electric vehicles, and the heat exchange flow channel device can provide good heat exchange effect for the battery. When the battery needs to be heated, heat exchange agent with heat can be transferred to various regions of the battery through the flow channel 21 to assist in heating the battery. When the battery needs to be cooled, the flow channel 21 can be used reversely, so that heat exchange agent with a low temperature is reversely transferred to various regions of the battery through the flow channel 21 to assist in cooling the battery.

Based on the heat exchange flow channel device, the heat exchange plate 2 and a battery tray can also be formed, and a battery structure can also be integrated. The heat exchange flow channel device provided by this technical solution is designed to provide stable heat exchange performance for batteries of new-energy electric vehicles and provide a better temperature environment for the batteries.

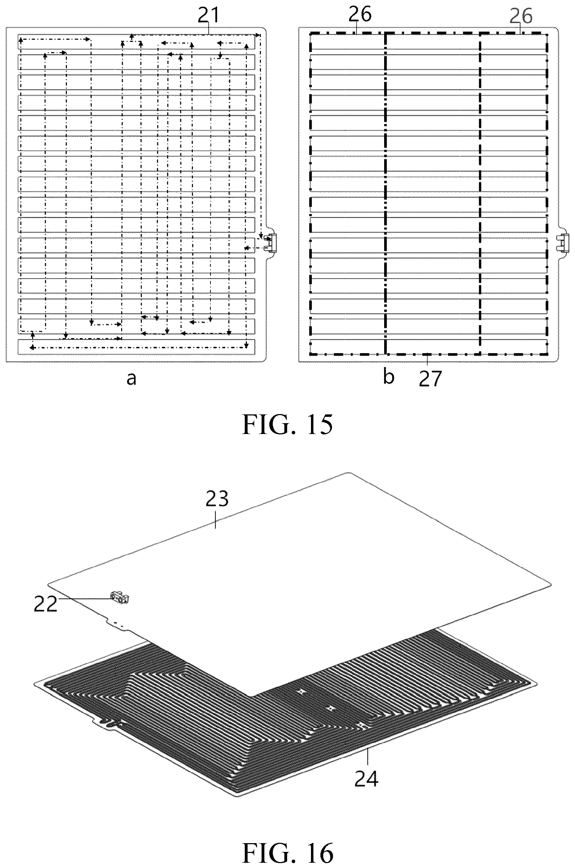

As shown in FIG. 16, this technical solution provides a heat exchange plate 2. The heat exchange plate 2 is formed with a first terminal 221, a second terminal 222, and a flow channel 21. The flow channel 21 converges to the first terminal 221 and the second terminal 222 through a flow converging end.

The heat exchange plate 2 may include a flow channel plate 24 and a base plate 23. Various flow channels 21 are provided on the flow channel plate 24. The flow channel 21 extends from the flow converging end to the inside of the flow channel plate 24. The flow channel 21 is diverged by a flow diverging/converging junction to form more stages of branches. These flow channels 21 are also arranged in turns through a direction change junction, so that the branches cover the entire flow channel plate 24 to achieve flow heat exchange in each region.

As shown in FIG. 16, the flow channel plate 24 and the base plate 23 are combined to form the heat exchange plate 2. On the flow channel plate 24, the flow channel 21 may have a groove structure and has a top surface that is not sealed. After the base plate 23 covers the flow channel plate 24, the base plate 23 can form top surface seal on the flow channel 21. In this way, the base plate 23 and the flow channel 21 form the heat exchange plate 2 as a whole. The first terminal 221 and the second terminal 222 may be formed by combining terminal components provided on the base plate 23 and the flow channel plate 24. The terminal component is provided with the first terminal 221 and the second terminal 222. After the base plate 23 covers the flow channel plate 24, a first flow converging end and a second flow converging end of the flow channel 21 can be connected to the first terminal 221 and the second terminal 222.

According to the design ideas of each feature of the heat exchange plate 2 in this solution, this solution can be divided into different sections. Different sections represent different technical features that this solution focuses on. The flow channel 21 is designed based on the technical features that are focused on, to obtain a more even heat exchange solution.

### First aspect

This technical solution can divide the heat exchange plate 2 into different regions to perform different degrees of heat exchange treatment on different regions. Based on the layout characteristic that after flowing into the flow channel 21 from the terminal, a working medium definitely first flows into a region for heat exchange and then flows into a region for heat exchange, the flow channel 21 can be selectively arranged according to heat conditions in different regions.

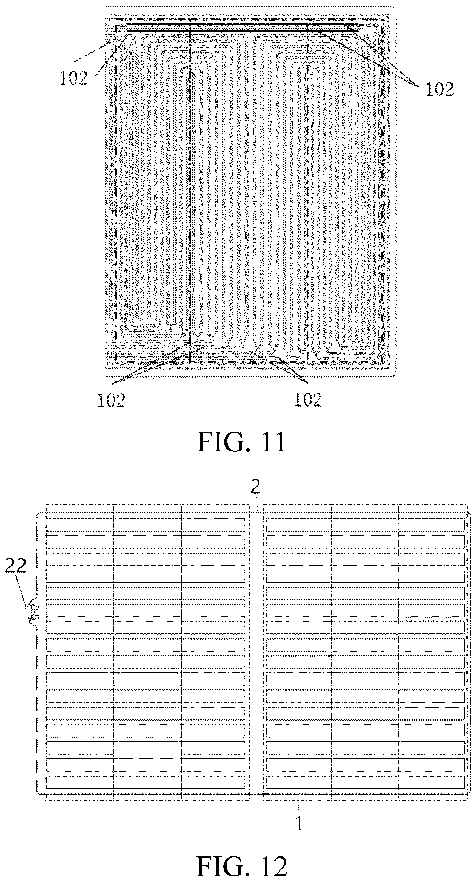

In practical applications, because different battery structures are provided in different regions of an integrated battery structure, the degrees of heat generated during operation are also different. This is related to the placement and arrangement of battery electrode cores. As shown in FIG. 2, the heat exchange plate 2 may include the first-type region 26 and the second-type region 27. The first-type region 26 corresponds to a region where the electrode core generates relatively high heat in the integrated battery structure, and the second-type region 27 corresponds to a region where the electrode core generates relatively low heat in the integrated battery structure. In the implementation shown in FIG. 2, the electrode cores of the battery can be arranged in two columns side by side, as shown in FIG. 12. Since tabs are usually provided at two ends of the electrode core for electrical connection, more heat is generated. Therefore, a leftmost longitudinal region in FIG. 3 is the first-type region 26, a wide longitudinal region in the middle is the first-type region 26, and a rightmost longitudinal region is the first-type region 26. These three regions all correspond to large heat generating regions at two ends of the electrode core.

When the electrode cores of the integrated battery structure are arranged in other manners, or the electrode cores are electrically connected in other manners, positions and numbers of first-type regions 26 and second-type regions 27 are different. This technical solution uses the case shown in FIG. 12 and FIG. 2 as an example to explain the design features of this part.

The heat exchange plate 2 is provided with the flow channel 21, and the flow channel 21 is configured to allow a working medium to flow. The working medium can exchange heat and gradually exchange heat when flowing to different regions. The flow channel 21 extends to the first-type region 26 and the second-type region 27 as a whole.

The heat exchange plate 2 can be switched to two states: a cooling mode and a heating mode. In these two states, the heat exchange plate 2 or a pump device causes the working medium to flow in the opposite direction, thereby achieving the purpose of preferentially performing heat exchange on a region.

When the heat exchange plate 2 is in the cooling mode, the flow channel 21 is designed in such a way that the working medium can flow from the first-type region 26 to the second-type region 27. That is, the flow channel 21 is designed such that the working medium first flows into the flow channel 21 in the first-type region 26 and then flows into the flow channel 21 in the second-type region 27. In this way, the working medium can first perform heat exchange in the first-type region 26, and the working medium preferentially absorbs the heat generated by the battery structure corresponding to the first-type region 26, and then the heat exchange capability of the working medium decreases. The working medium then flows to the second-type region 27 to exchange the heat generated by the battery corresponding to this region. Finally, the working medium flows to the terminal and flows out from the heat exchange plate 2.

On the contrary, when the heat exchange plate 2 is in the heating mode, the flow channel 21 is designed in such a way that the working medium can flow from the second-type region 27 to the first-type region 26. That is, the flow channel 21 is designed such that during reverse flow, the working medium can first flow into the flow channel 21 in the second-type region 27 and then flow into the flow channel 21 in the first-type region 26. The working medium can first exchange heat with the second-type region 27 and dissipate the heat to a space where the battery structure corresponding to the second-type region 27 is located. Then, the heat exchange capability of the working medium decreases and flows into the first-type region 26. The working medium dissipates the remaining heat in the first-type region 26 to a space where the battery structure is located, and then flows back to the terminal.

Heating of the battery electrode core is usually constant. Regardless of an external environment and whether the battery is in a discharging or charging state, a part of the electrode core where tabs and electrical connection points are provided is always a region that generates higher heat, as shown in the FIG. 12, and the middle region of the electrode core generates moderate heat, that is, a part of the electrode core where electrical connection points and tabs are not provided is not prone to heat. When heating is required, a region of the electrode core without a tab is often colder and requires more heat. When cooling is required, a region of the electrode core with a tab is often hotter and requires better cooling. The advantage of this design is that the flow channel 21 of the heat exchange plate 2 is arranged based on the working characteristic of the battery electrode core according to different regions of structures that generate different heat. Moreover, working medium flow directions used in the heating mode and the cooling mode are opposite. During heat dissipation, the working medium first flows along the flow channel 21 to a region with higher heat. During heating, the working medium first flows along the flow channel 21 to a region with lower heat. This allows the working medium to flow preferentially to a region that requires heat exchange.

Optionally, the first-type region 26 corresponds to a first position of the battery, and the second-type region 27 corresponds to a second position of the battery. When the battery operates, heat generated by the battery in the first position is basically greater than heat generated by the battery in the second position. Corresponding to the implementation shown in FIG. 12, the first position corresponds to a left vertical bar, a middle vertical bar, and a right vertical bar shown in FIG. 2. The second position may correspond to a region sandwiched between the left vertical bar and the middle vertical bar, and correspond to a region between the right vertical bar and the middle vertical bar. In other battery and electrode core distribution solutions, the arrangement and number of the first positions and the second positions may change, but this does not deviate from the arrangement idea of the flow channel 21 mentioned above. The flow channel 21 can always be extended to the first-type region 26 and then extended to the second-type region 27 without repeatedly extending between the first-type region 26 and the second-type region 27.

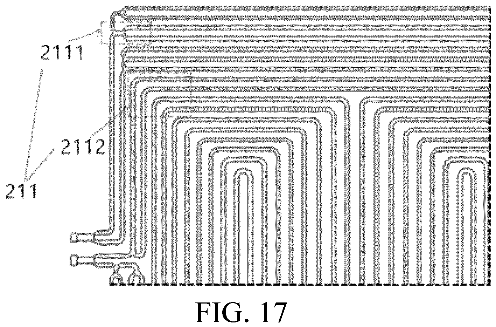

As shown in FIG. 17, the heat exchange plate 2 includes a first flow converging end and a second flow converging end. The first flow converging end is a connection point where the flow channel 21 converges to the first terminal 221. The second flow converging end is a connection point where the flow channel 21 converges to the second terminal 222.

When the heat exchange plate 2 is configured to heat the battery, the working medium can flow into the heat exchange plate 2 from the second flow converging end. When the layout of the flow channel 21 is feasible, the working medium preferentially flows into the second-type region 27 with a lower temperature, to heat the second-type region 27, and then flows into the first-type region 26. Finally, the working medium can flow out from the first flow converging end after converging. Prioritizing heating of the position corresponding to the second-type region 27 can better protect the battery and provide a sufficient operating temperature for the battery. Especially, when the battery module has a self-heating function, the heat exchange plate 2 can cooperate with the self-heating function to better provide temperature protection for the central region of the electrode core that is difficult to generate heat and prevent an excessively low temperature.

When the heat exchange plate 2 is configured to cool the battery module, the working medium can flow into the heat exchange plate 2 from the first flow converging end. When the layout of the flow channel 21 is feasible, the working medium preferentially flows into the first-type region 26 with a higher temperature, to cool the first-type region 26, and then flows into the second-type region 27.

In practical applications, as shown in FIG. 2, the first flow converging end and the second flow converging end are concentrated on the left side of the heat exchange plate 2. When arranging the flow channel 21, due to the panel space limitation, there may be a case in which the flow channel 21 cannot be arranged in the above ideal manner. In the implementation shown in FIG. 2, for the three regions 2622, 2612, and 272 located on the right side, 272 can be heated preferentially or 2622 and 2612 can be cooled preferentially according to the optional arrangement of the flow channel 21. In the three regions 2621, 2611, and 271 located on the left side near the flow converging end and the entrance and exit, due to the relative congestion of the flow channel 21, the above optional arrangement may not be implemented. In this regard, the following implementation may be adopted: the flow channel 21 is introduced from the first flow converging end, then is first arranged to the region 2611 and then extended to the two regions 271 and 2621, and finally returns to the second flow converging end.

Optionally, after the flow channel 21 is introduced from the first flow converging end, the flow channel can diverge the working medium through flow diverging, to better achieve temperature control on the entire surface. For example, the working medium flowing into the first-type region 26 from the first flow converging end can be diverged into more branch flow channels 21 in the first-type region 26. Then, when the working medium flows into the second-type region 27, flow converging and diverging are not required, as shown in the region 271 of FIG. 3. Finally, after the working medium enters the region 2621 along the flow channel 21, the flow channels 21 can be converged to collect the working medium, so that the working medium can flow out from the second flow converging end.

In a process in which the working medium passes through the first-type region 26 and the second-type region 27 and then converges into the second flow converging end, the working medium is diverged and converged at least once.

When the working medium is configured to heat the battery module, that is, when the working medium flows in from the second flow converging end and flows out from the first flow converging end, the flow channel 21 has an extension characteristic opposite to that of cooling. The working medium first diverges once or twice to disperse to various regions along a pipeline, and then converges at least once, and flows to the first flow converging end.

In particular, the working medium in this solution can be selected as a refrigerant working medium that can switch between gas and liquid phases. This type of refrigerant working medium can effectively implement heat exchange through phase state change, and has higher heat exchange efficiency than traditional water cooling, coolant, and other methods. In contrast, due to the phase state change of the refrigerant working medium, if the refrigerant working medium is concentrated in a region and undergoes substantial phase change, other regions cannot obtain good heat exchange effect. In this regard, this solution uses flow diverging methods such as diverging one flow channel into two and diverging two flow channels into four as much as possible, to improve the evenness of the working medium flow in the flow channel 21. Optionally, this solution uses multiple parallel flow channels 21 with evenly changing lengths as much as possible, to jointly perform heat exchange in the first-type region 26 and the second-type region 27, to further reduce concentrated phase change of the working medium caused by uneven flow.

As shown in FIG. 1 and FIG. 2, in the left region near the flow converging end, that is, in the three regions 2621, 271, and 2611, due to the crowded space, this solution preferentially arranges the flow diverging junction and the flow converging junction in the two regions 2621 and 2611. These two regions correspond to high-heating regions of the battery. Performing diverging and converging in these regions helps to reduce the rapid and concentrated heat exchange of the working medium in a narrow space, so that the working medium can perform heat exchange in these regions more evenly. For example, the working medium flowing in from the first flow converging end can concentrate at the corner of the region 2621 and diverge for the first time, and then diverge for the second time at the upper part of 2611. Then, some flow channels 21 can diverge again in the lower part of the region 271, while other flow channels 21 do not need to diverge. Finally, when the flow channels 21 extend to the lower part of the region 2621, the flow channels can concentrate and converge and then return to the second flow converging end. Usually, flow converging can be performed once or twice. The above description uses heat dissipation as an example. During heating, the form of diverging and converging is completely opposite.

Optionally, as shown in FIG. 1 and FIG. 2, in the right region away from the flow converging end, that is, in the three regions 2622, 2612, and 272, the space is relatively large. This solution preferentially evenly distributes flow diverging junctions and flow converging junctions at the upper and lower ends of the three regions, and a number of times of flow diverging and converging can be correspondingly larger. Using the cooling solution as an example, the flow channel 21 extending from the first flow converging end on the left side to the right side can separately diverge and extend into the region 2622 and the region 2612. In these two regions, the flow channel 21 can extend straightly and extend longitudinally across the most area of the two regions. Then, the flow channel 21 can turn to the region 272 between 2622 and 2612. The flow channel 21 usually extends straightly through the region 272, and finally parallel flow channels 21 converge on the lower side of the region 272. Finally, the flow channel 21 extends to the left to return to the second flow converging end. In this solution, the flow channel 21 can diverge for two or three times to achieve the layout characteristic of large-area parallel and long-distance extension. Then, the flow channel converges for two to three times to converge to the trunk and returns to the flow converging end. Similarly, in the heating mode, the working medium flows in from the second flow converging end and directly flows to the lower side of the region 272, and diverges for multiple times to form multiple parallel flow channels.

In particular, among the flow channels 21 introduced from the first flow converging end, outermost flow channels 21 basically no longer diverge after the initial diverging, circle around the outer edge of the heat exchange plate 2 once, and finally converge again at a position close to the second flow converging end. These flow channels 21 are configured to balance the temperature of the working medium at the end of the flow. Especially, when a phase-change refrigerant working medium is used, these flow channels 21 can play a better role. A volume of the working medium after phase change changes greatly, which is prone to problems such as accumulation, poor circulation, and temperature concentration. This problem is more likely to be very severe at the flow converging end. The working medium in the circling outermost flow channel 21 has relatively small phase change, and can be configured to balance the temperature and phase state of the working medium in other flow channels 21 at the end of the entire circulation. This ensures the smoothness and evenness of the overall circulation.

According to a first aspect of the present disclosure, this solution provides a heat exchange plate, applied to a battery, including:
a first-type region 26 and a second-type region 27; and
a flow channel 21, the flow channel 21 being configured to allow a working medium to flow, and the flow channel 21 being distributed in the first-type region and the second-type region.

The heat exchange plate 2 is configured to cool the battery, and the working medium flows from a flow channel 21 of the first-type region 26 to a flow channel 21 of the second-type region 27; or
the heat exchange plate 2 is configured to heat the battery, and the working medium flows from a flow channel 21 of the second-type region 27 to a flow channel 21 of the first-type region 26.

Optionally, the first-type region is used to correspond to a first position of the battery, and the second-type region is used to correspond to a second position of the battery. During the operation of the battery, a temperature of the first position is greater than a temperature of the second position.

Optionally, the heat exchange plate 2 includes a first flow converging end and a second flow converging end.

When the heat exchange plate 2 is configured to heat the battery, the working medium flows from the second flow converging end into the second-type region 27, and after passing through the first-type region 26, converges into the first flow converging end.

Optionally, the heat exchange plate 2 includes a first flow converging end and a second flow converging end.

When the heat exchange plate 2 is configured to cool the battery, the working medium flows from the first flow converging end into the first-type region 26, and after passing through the second-type region 27, converges into the second flow converging end.

Optionally, in a process in which the working medium flows from the first flow converging end into the first-type region 26, and after passing through the second-type region 27, converges into the second flow converging end, the working medium diverges at least once, and/or converges at least once.

Optionally, the working medium flows from the second flow converging end into the second-type region 27, and after passing through the first-type region 26, converges into the first flow converging end, the working medium diverges at least twice, and/or converges at least once.

Optionally, in a process in which the working medium flows from second flow converging end into the second-type region 27, and after passing through the first-type region 26, converges into the first flow converging end, the working medium diverges at least once, and/or converges at least once.

Optionally, the first-type region 26 includes a first partition 261 and a second partition 262.

The second-type region 27 includes a first partition region 271.

When the heat exchange plate 2 is configured to cool the battery, the working medium flows from the first partition 261 of the first-type region 26 to the first partition region 271 of the second-type region 27; and/or
the working medium flows from the second partition 262 of the first-type region 26 to the first partition region 271 of the second-type region 27.

Optionally, when the heat exchange plate 2 is configured to cool the battery, the working medium diverges at least once in a process of flowing from the first partition 261 of the first-type region 26 to the first partition region 271 of the second-type region 27.

Optionally, the working medium diverges at least once and converges at least once in a process of flowing from the first partition 261 of the first-type region 26 to the first partition region 271 of the second-type region 27.

Optionally, when the heat exchange plate 2 is configured to cool the battery, the working medium diverges at least once in the first partition 261, and then flows into the first partition region 271 of the second-type region 27.

Optionally, when the heat exchange plate 2 is configured to cool the battery, the working medium diverges at least once in the first partition 261, and then flows into the first partition region 271 of the second-type region 27, and converges at least once in the first partition region 271 of the second-type region 27.

Optionally, the first partition 261 of the first-type region 26 includes a first sub-region 2611, the second partition 262 of the first-type region 26 includes a first sub-zone 2621, and the first partition region 271 is located between the first sub-zone 2621 and the first sub-region 2611.

Optionally, the working medium undergoes at least one open-loop circulation in the first sub-zone 2621, the first partition region 271, and the first sub-region 2611.

Optionally, the open-loop circulation includes: the working medium flows from the first sub-zone 2621 to the first partition region 271, then to the first sub-region 2611, then to the first partition region 271, then to the first sub-zone 2621, then to the first partition region 271, then to the first sub-region 2611, then to the first partition region 271, and then to the first sub-zone 2621.

Optionally, the working medium diverges at least twice and converges at least once in the open-loop circulation process.

Optionally, the working medium diverges for the first time in the first sub-region 2611, diverges for the second time in the first sub-zone 2621, and converges once in the first sub-region 2611.

Optionally, the first-type region 26 includes at least 2 sub-regions, and/or the second-type region 27 includes at least 2 sub-zones.

Optionally, when the heat exchange plate 2 is in the cooling mode, the working medium diverges at least twice in a process of flowing from the first partition 261 to the second-type region 27.

Optionally, when the heat exchange plate 2 is in the cooling mode, the working medium diverges at least twice in a process of flowing from the first partition 261 to the second-type region 27.

Optionally, the working medium diverges at least twice and converges at least once in a process of flowing from the first partition 261 to the second-type region 27.

Optionally, the first-type region 26 includes a first partition 261 and a second partition 262.

The second-type region 27 includes a second partition region 272.

When the heat exchange plate 2 is in the cooling mode, the working medium flows from the first partition 261 of the first-type region 26 to the second partition region 272; and/or
the working medium flows from the second partition 262 of the first-type region 26 to the first partition region 271.

Optionally, when the heat exchange plate 2 is in the cooling mode, the working medium diverges at least twice in a process of flowing from the first partition 261 of the first-type region 26 to the second partition region 272.

Optionally, the working medium diverges at least twice and converges at least once in a process of flowing from the first partition 261 of the first-type region 26 to the second partition region 272.

Optionally, when the heat exchange plate 2 is in the cooling mode, the working medium flows into the second partition region 272 after diverging at least twice in the first partition 261.

Optionally, when the heat exchange plate 2 is in the cooling mode, the working medium flows into the first partition region 271 after diverging at least twice in the first partition 261, and converges at least once in the second partition region 272.

Optionally, the first partition 261 of the first-type region 26 includes a second sub-region 2612, the second partition 262 of the first-type region 26 includes a second sub-zone 2622, and the second partition region 272 is located between the second sub-zone 2622 and the second sub-region 2612.

Optionally, the working medium flows through the second sub-zone 2622, the second partition region 272, the second sub-region 2612, and the second partition region 272 in sequence.

Optionally, the working medium flows from the second sub-zone 2622 into the second partition region 272.

Optionally, the working medium diverges twice in the second sub-region 2612.

Optionally, the working medium converges once in the second partition region 2721.

Optionally, the first sub-region 2611 is adjacent to the second sub-zone 2622.

Optionally, after passing through the first sub-zone 2621, the first partition region 271, and the first sub-region 2611, the working medium flows into the second sub-zone 2622.

Optionally, the working medium flows through the second partition region 272, the second sub-region 2612, and the second partition region 272 in sequence from the second sub-zone 2622, and flows out from the second partition region 272.

Optionally, the working medium flows into the second partition region 272 from the second sub-zone 2622 and flows out from the second partition region 272.

Optionally, the heat exchange plate 2 further includes a third-type region. The third-type region is a region where the heat exchange plate 2 is covered by the battery pack. The first-type region 26 and the second-type region 27 form a heat exchange region. The third-type region is located in the heat exchange region.

Optionally, the flow channel 21 located between the heat exchange region and the third-type region diverges at most 6 times or converges at most 6 times.

Optionally, the flow channel 21 located between the heat exchange region and the third-type region enters the second-type region 27 after diverging in the first-type region 26.

Optionally, the flow channel 21 located between the heat exchange region and the third-type region passes through the first sub-zone 2621, the first partition region 271, the first sub-region 2611, and the first partition region 271, and then flows out from the first sub-zone 2621.

Optionally, the flow channel 21 located between the heat exchange region and the third-type region passes through the first sub-zone 2621, the first partition region 271, the first sub-region 2611, the second sub-zone 2622, the second partition region 272, the second sub-region 2612, the second partition region 272, the second sub-zone 2622, the first sub-region 2611, and the first partition region 271, and then enters the first sub-zone 2621 and flows out.

Optionally, the flow channel 21 located between the heat exchange region and the third-type region diverges in the first sub-zone 2621, and/or the flow channel 21 located between the heat exchange region and the third-type region converges in the first sub-zone 2621.

Optionally, the first-type region 26 includes a first partition 261 and a second partition 262.

When the heat exchange plate 2 is configured to heat the battery, the working medium flows from the first partition region 271 of the second-type region 27 to the first partition 261 of the first-type region 26; and/or
the working medium flows from the first partition region 271 of the second-type region 27 to the second partition 262 of the first-type region 26.

Optionally, when the heat exchange plate 2 is configured to heat the battery, the working medium converges at least once in a process of flowing from the first partition region 271 of the second-type region 27 to the second partition 262 of the first-type region 26.

Optionally, the working medium diverges at least once before flowing from the first partition region 271 of the second-type region 27 to the second partition 262 of the first-type region 26, and converges at least once after flowing into the second partition 262.

Optionally, when the heat exchange plate 2 is configured to heat the battery, the working medium diverges at least once in the first partition region 271, and then flows into the second partition 262 to the first-type region 26.

Optionally, when the heat exchange plate 2 is configured to heat the battery, the working medium diverges at least once, and then flows into the first partition 261 of the first-type region 26, and diverges at least once in the first partition 261 of the first-type region 26.

Optionally, the first partition 261 of the first-type region 26 includes a first sub-region 2611, the second partition 262 of the first-type region 26 includes a first sub-zone 2621, and the first partition region 271 is located between the first sub-zone 2621 and the first sub-region 2611.

Optionally, the working medium undergoes at least one open-loop circulation in the first sub-zone 2621, the first partition region 271, and the first sub-region 2611.

Optionally, the open-loop circulation includes: the working medium flows from the first sub-zone 2621 to the first partition region 271, then to the first sub-region 2611, then to the first partition region 271, then to the first sub-zone 2621, then to the first partition region 271, then to the first sub-region 2611, then to the first partition region 271, and then to the first sub-zone 2621.

Optionally, the open-loop circulation process includes diverging at least twice and converging at least once.

Optionally, the working medium diverges for the first time in the first sub-zone 2621, diverges for the second time in the first sub-region 2611, and returns to the first sub-zone 2621 and then converges once.

Optionally, the working medium flows into the flow channel 21 from a position close to the first sub-zone 2621. The working medium flows from the first sub-zone 2621 to the first partition region 271 and further returns to the first sub-zone 2621. The process of flowing out from the flow channel 21 includes diverging at least twice and converging at least twice.

Optionally, the first partition 261 of the first-type region 26 includes a first sub-region 2611 and a second sub-region 2612, and the second partition 262 of the first-type region 26 includes a first sub-zone 2621 and a second sub-zone 2622.

The second-type region 27 includes a first partition region 271 and a second partition region 272.

The second partition region 272 is located between the second sub-zone 2622 and the second sub-region 2612, and the first partition region 271 is located between the first sub-region 2611 and the first sub-zone 2621.

The first sub-region 2611 and the first sub-zone 2622 are adjacent to each other.

Optionally, some flow channels 21 cause the working medium to pass through edges of the first sub-zone 2621, the first partition region 271, the first sub-region 2611, and the second sub-zone 2622, and to first flow into the second partition region 272 and then diverge into the second sub-zone 2622 and the second sub-region 2612.

Optionally, some other flow channels 21 cause the working medium to pass through edges of the first sub-zone 2621 and the first partition region 271, and to first flow into the first sub-region 2611, then diverge into the first partition region 271, and finally flow into the first sub-zone 2621.

Optionally, the flow channel 21 causes the working medium to diverge at least twice in the second partition region 272.

The flow channel 21 causes the working medium to converge at least once in each of the second sub-region 2612 and the second sub-zone 2622.

Optionally, the working medium flowing out from the second sub-region 2612 and the second sub-zone 2622 passes through the first sub-region 2611, the first partition region 271, and the first sub-zone 2621 along the edge of the heat exchange plate 2, and converges and then flows out from the heat exchange plate 2.

Optionally, the flow channel 21 causes the working medium flowing into the first sub-zone 2621 to converge once in the first sub-zone 2621, and to flow back to the first sub-region 2611 and then converge once again.

Optionally, after converging in the first sub-region 2611, the working medium flows out from the edge of the heat exchange plate 2.

When the heat exchange plate 2 is in the cooling mode, the working medium flows into the second-type region 27 after diverging at least twice in the first partition 261, and converges at least once in the second-type region 27 and then flows into the second flow converging end.

When the heat exchange plate 2 is in the cooling mode, the working medium flows into the second-type region 27 after diverging at least twice in the first partition 261, and converges at least twice in the second-type region 27 and then flows into the second flow converging end.

The first flow converging end is close to the second flow converging end and located on a first side of the heat exchange plate 2.

The heat exchange plate 2 includes a first heat exchange region and a second heat exchange region. The second heat exchange region is located between the first heat exchange region and the first side. The first heat exchange region includes a second-type region 27 and a first-type region 26 distributed on two opposite sides of the second-type region 27.

The second heat exchange region includes a second-type region 27 and a first-type region 26 distributed on two opposite sides of the second-type region 27.

When the heat exchange plate 2 is in the cooling mode, in the second heat exchange region, the working medium flows into another first-type region after diverging once in one first-type region 26, flows into the second-type region 27 after diverging once in the another first-type region 26, and flows into the second flow converging end after converging twice in the second-type region 27.

When the heat exchange plate 2 is in the cooling mode, in the first heat exchange region, the working medium flows into the second-type region 27 after diverging once in one first-type region 26, and flows into the second flow converging end after converging twice in the second-type region 27.

The working medium flows into the second-type region 27 after diverging twice in another first-type region 26, and flows into the second flow converging end after converging twice in the second-type region 27.

The first-type region 26 distributed on two opposite sides of the second-type region 27 is respectively the first partition 261 and the second partition 262.

When the heat exchange plate 2 is in the cooling mode, in the first heat exchange region, the working medium flows into the second-type region 27 after diverging once in the first partition 261, and flows into the second flow converging end after converging twice in the second-type region 27.

The working medium flows into the second-type region 27 after diverging twice in the second partition 262, and flows into the second flow converging end after converging twice in the second-type region 27.

The first flow converging end and the second flow converging end are both located in the second heat exchange region, and numbers of first flow converging ends and second flow converging ends are both 2.

The embodiments of the present disclosure further provide heat exchange plates in four aspects.

According to a first aspect, referring to FIG. 1 to FIG. 17, an embodiment of the present disclosure provides a heat exchange plate. The heat exchange plate includes:
a first terminal 221 and a second terminal 222;
a first flow converging end and a second flow converging end, the first flow converging end being connected to the first terminal 221, and the second flow converging end being connected to the second terminal 222; and
a flow channel 21, the flow channel 21 being configured to connect the first flow converging end and the second flow converging end, and the flow channel extending from the first flow converging end to the second flow converging end after changing a direction at least once.

Specifically, the heat exchange plate 2 may be provided with a flow diverging component 22, and the first terminal 221 and the second terminal 222 may be arranged on the flow diverging component 22, as shown in FIG. 12. The first terminal 221 and the second terminal 222 can be configured to connect the heat exchange plate to an external component that provides a working medium. For example, an external pump can be connected to the heat exchange plate through the first terminal 221 and the second terminal 222.

The first flow converging end and the second flow converging end can be used as end structures at two ends of the flow channel 21. For example, the first flow converging end and the second flow converging end can be used as end structures configured to plug or threadedly connect the two ends of the flow channel 21 to the first terminal 221 and the second terminal 222 respectively. The flow channel 21 in the heat exchange plate extends from the first flow converging end to the second flow converging end after changing a direction at least once, to improve the distribution density of the flow channel 21 in the heat exchange plate. For example, the flow channel 21 is distributed in a zigzag or serpentine shape in the heat exchange plate, to ensure the distribution density of the flow channel 21 in the heat exchange plate, thereby improving the heat exchange effect of the heat exchange plate.

Optionally, referring to FIG. 17, a direction change junction 211 is formed in a direction change position of the flow channel 21. The direction change junction includes a first-type direction change junction 2111. A flow channel direction at one end of the first-type direction change junction 2111 forms a direction change angle with a flow channel direction at another end of the first-type direction change junction 2111. In addition, a number of flow channels at one end of the first-type direction change junction 2111 is greater than a number of flow channels at another end of the first-type direction change junction 2111.

Specifically, a structure of the first-type direction change junction 2111 can be shown in FIG. 7. The flow channel 21 can bend by a direction change angle when passing through the first-type direction change junction 2111, for example, bend by 90° or 180°, to achieve flexible direction change of the flow channel 21 and ensure the distribution density of the flow channel 21 in the heat exchange plate. The first-type direction change junction 2111 can also adjust a number of flow channels while functioning to bend. For example, when the flow channel 21 passes through the first-type direction change junction 2111, the flow channel forms a flow channel structure of diverging one flow channel into two, diverging one flow channel into three, or diverging one flow channel into more, to improve the distribution flexibility of the flow channel 21 in the heat exchange plate.

Optionally, the number of flow channels at one end of the first-type direction change junction 2111 is twice the number of flow channels at another end of the first-type direction change junction 2111. That is, the flow channel 21 can diverge or converge when passing through the first-type direction change junction 2111. By adjusting a number of flow channels and a flow amount of a single flow channel, the temperature evenness of the heat exchange plate during heat exchange can be ensured.

Optionally, referring to FIG. 17, the direction change junction 211 includes a second-type direction change junction 2112. A flow channel direction at one end of the second-type direction change junction 2112 forms a direction change angle with a flow channel direction at another end of the second-type direction change junction 2112. The flow channel 21 can bend by a direction change angle when passing through the second-type direction change junction 2112, for example, bend by 90° or 180°, to achieve flexible direction change of the flow channel 21 and ensure the distribution density of the flow channel 21 in the heat exchange plate.

Optionally, referring to FIG. 2 and FIG. 17, the first-type direction change junction 2111 is located in the peripheral of the heat exchange plate, and the second-type direction change junction 2112 is located in the middle of the heat exchange plate. Since both the first-type direction change junction 2111 and the second-type direction change junction 2112 have the direction change function, the flow channel 21 can change a direction during bending both in the peripheral and the middle of the heat exchange plate. Moreover, the number of flow channels at one end of the first-type direction change junction 2111 is greater than the number of flow channels at another end of the first-type direction change junction 2111, so that after the flow channel 21 diverges and converges in the peripheral of the heat exchange plate, the smooth flow of the flow channel 21 in the middle of the heat exchange plate can be ensured.

Optionally, referring to FIG. 12 and FIG. 7, the first terminal 221, the second terminal 222, the first flow converging end, and the second flow converging end are all located on a first side of the heat exchange plate. For example, the heat exchange plate can be a square plate, and the first side can be the left side of the heat exchange plate in FIG. 3. In the flow channel 21, refrigerants such as R123a and R32 and working mediums such as CO2 and water can enter the flow channel 21 from the left side of the heat exchange plate, and flow around and perform heat exchange in the heat exchange plate and then flow out from the flow channel 21 from the left side of the heat exchange plate, to improve the heat exchange efficiency of the working medium of the flow channel 21 in the heat exchange plate.

Optionally, referring to FIG. 12, FIG. 7, and FIG. 17, the first flow converging end is connected to 2 second-type direction change junctions 2112, and the second flow converging end is connected to 2 first-type direction change junctions 2111. Specifically, when the heat exchange plate performs cooling, the first flow converging end can be the inlet of the working medium in the flow channel 21, and the second flow converging end can be the outlet of the working medium in the flow channel 21. When passing through the first flow converging end and flowing into the flow channel 21, the working medium can change a direction preliminarily. When passing through the second flow converging end and flowing out from the flow channel 21, the working medium can converge while changing a direction. That is, the working medium can flow out from the flow channel 21 from a flow converging end after converging, which simplifies connection between the flow channel 21 and an external component.

When the heat exchange plate performs heating, the second flow converging end can be the inlet of the working medium in the flow channel 21, and the first flow converging end can be the outlet of the working medium in the flow channel 21.

Optionally, referring to FIG. 1 and FIG. 2, the heat exchange plate is square, three corner positions of the heat exchange plate are provided with the first-type direction change junction 2111 and the second-type direction change junction 2112, and one corner position of the heat exchange plate is provided with the first-type direction change junction 2111.

Specifically, the heat exchange plate can be a square heat exchange plate as shown in FIG. 2. In FIG. 2, an upper left corner of the heat exchange plate, that is, a corner of the heat exchange plate close to the first flow converging end can be provided with one or more first-type direction change junctions 2111, so that the working medium that flows in from the first flow converging end or about to flow out from the flow channel 21 from the first flow converging end can quickly diverge or converge.

In FIG. 2, one or more first-type direction change junctions 2111 and one or more second-type direction change junctions 2112 can be provided on the lower left corner and the two right corners of the heat exchange plate, to ensure that the working medium in the flow channel 21 can flexibly diverge and converge while changing a direction in the heat exchange plate.

Optionally, referring to FIG. 2, the multiple second-type direction change junctions 2112 extend in a rectangular shape.

Specifically, the second-type direction change junction 2112 can bend by 90° or 180° during direction change. For example, when the second-type direction change junction 2112 bends by 90°, multiple continuous second-type direction change junctions 2112 can form a combination of the rectangular second-type direction change junctions 2112, that is, form a zigzag structure in which the multiple second-type direction change junctions 2112 extend in a rectangular shape. The multiple second-type direction change junctions 2112 with the zigzag structure can improve the heat exchange efficiency of the heat exchange plate.

Optionally, referring to FIG. 2, the multiple first-type direction change junctions 2111 are arranged side by side. Specifically, when horizontal flow channels are changed to vertical flow channels, flow channels can diverge or converge at the same time, so that the first-type direction change junction 2111 can be formed between the horizontal flow channels and the vertical flow channels. When multiple rows of horizontal flow channels are changed to multiple rows of vertical flow channels, multiple first-type direction change junctions 2111 arranged side by side can be formed to increase the flow channel density of the horizontal flow channels and the vertical flow channels after direction change.

Optionally, the heat exchange plate further includes the heat exchange plate 2.

According to a second aspect, referring to FIG. 2 to FIG. 17, an embodiment of the present disclosure provides a heat exchange plate. The heat exchange plate includes:
a first flow converging end and a second flow converging end;
a flow channel 21, the flow channel 21 being configured to connect the first flow converging end and the second flow converging end; and
a flow diverging/converging junction 212, the flow diverging/converging junction 212 being distributed on the flow channel 21, and numbers of flow channels 21 at two ends of the flow diverging/converging junction 212 being different.

Specifically, the first flow converging end and the second flow converging end can be used as end structures at two ends of the flow channel 21. For example, the first flow converging end and the second flow converging end can be used as end structures configured to plug or threadedly connect the two ends of the flow channel 21 to the first terminal 221 and the second terminal 222 respectively. The distribution of the flow channel 21 in the heat exchange plate extends from the first flow converging end to the second flow converging end after diverging at least once and converging at least once. The flow diverging can be diverging one flow channel into two, diverging one flow channel into three, or diverging one flow channel into more, and the flow converging can be converging two flow channels into one, converging three flow channels into one, or converging more flow channels into one, so as to form one or more flow diverging/converging junctions 212 on the flow channel 21, to improve the distribution density of the flow channel 21 in the heat exchange plate and improve the heat exchange effect of the heat exchange plate.

Optionally, referring to FIG. 2, the flow channel 21 includes a trunk and a branch. The trunk is connected to the first flow converging end and the second flow converging end. The branch is connected to an end of the trunk away from the first flow converging end and the second flow converging end.

Specifically, the trunk of the flow channel 21 may be a part of the flow channel that is directly connected to the first flow converging end and the second flow converging end and has not been diverged or converged, while the branch may be a part of the flow channel that is connected to the trunk after diverging from or converging into the trunk, so that the number of branches is greater than the number of trunks to ensure the distribution density of the flow channel 21 on the heat exchange plate.

Optionally, referring to FIG. 8, the flow diverging/converging junction 212 includes a first-stage flow diverging/converging junction 2121, and the branch includes a first-stage branch. The first-stage flow diverging/converging junction 2121 is connected between the trunk and the first-stage branch.

Specifically, the first-stage flow diverging/converging junction 2121 serves as a diverging or converging structure between the trunk and the first-stage branch, and can evenly diverge the working medium in the trunk into two or more first-stage branches, so that the working medium is dispersed in the heat exchange plate as early as possible to ensure the distribution density of the flow channel 21 in the heat exchange plate and the flexibility of heat exchange adjustment.

Optionally, at least two first-stage branches are arranged, that is, the first-stage flow diverging/converging junction 2121 can evenly diverge the working medium in the trunk into 2, 3, or more first-stage branches to ensure the distribution density of the flow channel 21 in the heat exchange plate.

In a specific embodiment, referring to FIG. 8, one end of the first-stage flow diverging/converging junction 2121 is connected to one of the trunks, and another end of the first-stage flow diverging/converging junction 2121 is connected to two of the first-stage branches, that is, the first-stage flow diverging/converging junction 2121 can evenly diverge the working medium in the trunk into the two first-stage branches, so as to facilitate control of the balance of the working medium flow in the two first-stage branches and ensure the equal working medium flow in the two first-stage branches.

Optionally, referring to FIG. 2 and FIG. 8, the flow diverging/converging junction 212 further includes a second-stage flow diverging/converging junction 2122, and the branch includes a second-stage branch. The second-stage flow diverging/converging junction 2122 is connected between the first-stage branch and the second-stage branch.

Specifically, the second-stage flow diverging/converging junction 2122 serves as a diverging or converging structure between the first-stage branch and the second-stage branch, and can evenly diverge the working medium in the first-stage branch into two or more second-stage branches, so that the working medium is dispersed in the heat exchange plate to ensure the distribution density of the flow channel 21 in the heat exchange plate and the flexibility of heat exchange adjustment.

Optionally, at least two second-stage branches are arranged. That is, the second-stage flow diverging/converging junction 2122 can evenly diverge the working medium in the first-stage branch into 2, 3, or more second-stage branches to ensure the distribution density of the flow channel 21 in the heat exchange plate.

In a specific embodiment, referring to FIG. 8, one end of the second-stage flow diverging/converging junction 2122 is connected to one of the first-stage branches, and another end of the second-stage flow diverging/converging junction 2122 is connected to two of the second-stage branches. That is, the second-stage flow diverging/converging junction 2122 can evenly diverge the working medium in the first-stage branch into 2 second-stage branches to facilitate control of the balance of the working medium flow in the 2 second-stage branches.

Optionally, referring to FIG. 2, the flow diverging/converging junction 212 is located on the peripheral of the heat exchange plate.

Specifically, when the flow diverging/converging junction 212 is located in the peripheral of the heat exchange plate, a continuous flow channel 21 can be formed in the middle of the heat exchange plate to improve smooth flow of the working medium of the flow channel 21 in the heat exchange plate.

Optionally, the first-stage branch includes an annular branch. The annular branch can be a first-type flow channel 25 in FIG. 1 and FIG. 3. Two ends of the annular branch are directly connected to the trunk. Because the trunk of the flow channel 21 is a part of the flow channel that is directly connected to the first flow converging end and the second flow converging end and has not been diverged or converged, the arrangement of the annular branch can simplify the flow channel of the working medium in the annular branch and avoid excessive heating and cooling of the first flow converging end and the second flow converging end, to ensure the temperature balance of the flow channel 21 during heat exchange.

Optionally, referring to FIG. 2, the flow diverging/converging junction 212 further includes a third-stage flow diverging junction, the branch includes a third-stage branch, and the trunk is connected to the first-stage branch, the second-stage branch, and the third-stage branch in sequence.

The first-stage flow diverging/converging junction 2121 is connected between the trunk and the first-stage branch, the second-stage flow diverging/converging junction 2122 is connected between the first-stage branch and the second-stage branch, and the third-stage flow diverging/converging junction is connected between the second-stage branch and the third-stage branch, so that the number of first-stage branches is twice the number of trunks, the number of second-stage branches is twice the number of first-stage branches, and the number of third-stage branches is twice the number of second-stage branches.

In addition, the flow diverging/converging junction 212 may further include a fourth-stage flow diverging junction, a fifth-stage flow diverging junction, a sixth-stage flow diverging junction, or more flow diverging junctions. The branch includes a fourth-stage branch, a fifth-stage branch, a sixth-stage branch, or more branches. The fourth-stage flow diverging junction is connected between the third-stage branch and the fourth-stage branch, the fifth-stage flow diverging junction is connected between the fourth-stage branch and the fifth-stage branch, and the sixth-stage flow diverging junction is connected between the fifth-stage branch and the sixth-stage branch, so that the flow channel 21 forms multiple stages of diverging and converging.

Optionally, the heat exchange plate further includes the heat exchange plate 2.

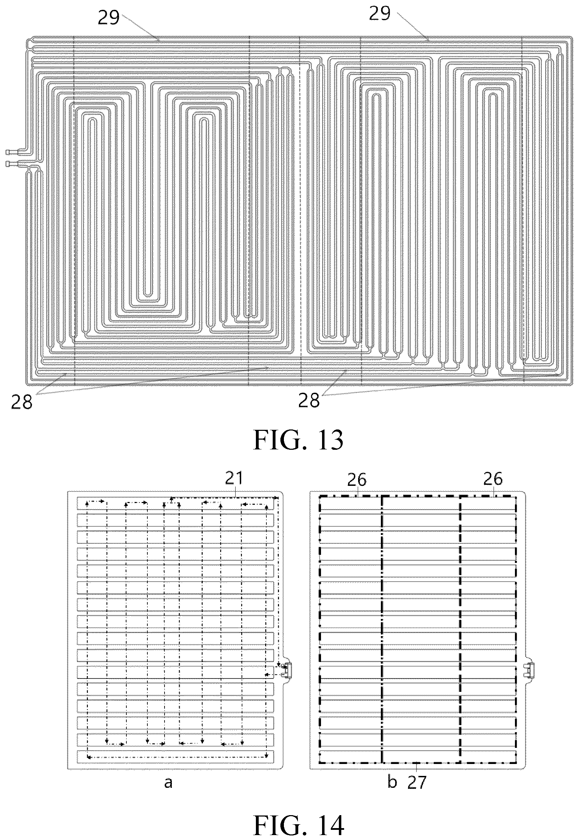

According to a third aspect, referring to FIG. 1 to FIG. 17, an embodiment of the present disclosure provides a heat exchange plate. Referring to FIG. 13, the heat exchange plate includes:
a first region 28 and a second region 29; and
a flow channel 21, the flow channel being distributed in the first region 28 and the second region 29, and average distribution density of the flow channel 21 in the first region 28 being greater than average distribution density of the flow channel 21 in the second region 29.

Specifically, the heat exchange plate can be configured to cool or heat a battery. For example, when the heat exchange plate cools the battery, a large amount of heat is generated at a positive electrode position and a negative electrode position during the operation of the battery. That is, the heat exchange plate needs to provide better cooling effect on the positive electrode position and the negative electrode position of the battery. When average distribution density of the flow channel 21 in the first region 28 is greater than average distribution density of the flow channel 21 in the second region 29, the first region 28 may face the positive electrode position and the negative electrode position of the battery, and the second region 29 may face the middle of the battery to improve the heat exchange effect of the heat exchange plate for the battery.

Optionally, a width of the flow channel 21 is less than 15mm.

Specifically, when the heat exchange plate provided by the embodiments of the present disclosure faces different heat exchange requirements in different positions, the heat exchange efficiency of the heat exchange plate can be improved through different distribution density of the flow channel 21, that is, the flow channel 21 with a smaller width may be used for heat exchange. The width of the flow channel 21 can be 3mm to 12mm. The width of the flow channel 21 is also a radial size of the flow channel 21. Optionally, to increase the distribution density of the flow channels 21, the width of the flow channel 21 can be set to 5mm to 10mm.

Optionally, the heat exchange plate further includes the heat exchange plate 2.

According to a fourth aspect, referring to FIG. 1 to FIG. 17, an embodiment of the present disclosure provides a heat exchange plate. The heat exchange plate includes:
a flow channel plate 24; and
a flow channel 21, the flow channel 21 being arranged on the flow channel plate 24, and in a plane where the heat exchange plate is located, an area for arranging the flow channel 21 being larger than 70% of an area of the flow channel plate 24.

Specifically, a ratio of the area for arranging the flow channel 21 in the flow channel plate 24 can be flexibly set according to the heat exchange object of the heat exchange plate. For example, when exchanging heat for a heat exchange object such as a battery with a high heat exchange requirement, for batteries with different powers and voltages, the area for arranging the flow channel 21 can be set to 75%, 80%, 85%, 90%, or 95% of the area of the flow channel plate 24, to improve the heat exchange flexibility of the heat exchange plate.

Optionally, a width of the flow channel is less than 15mm.

Specifically, when the heat exchange plate provided by the embodiments of the present disclosure faces different heat exchange requirements in different positions, the heat exchange efficiency of the heat exchange plate can be improved through different distribution density of the flow channel, that is, the flow channel 21 with a smaller width may be used for heat exchange. The width of the flow channel 21 can be 3mm to 12mm. The width of the flow channel 21 is also a radial size of the flow channel 21. Optionally, to increase the distribution density of the flow channels 21, the width of the flow channel 21 can be set to 5mm to 10mm.

Optionally, the heat exchange plate further includes the heat exchange plate 2.

An embodiment of the present disclosure further provides a battery tray, including:
the heat exchange plate; or
the heat exchange plate.

An embodiment of the present disclosure further provides a battery structure. The battery structure includes the battery tray.

Specifically, the battery structure includes:
a battery module 1, the battery module 1 having an electrode position and a non-electrode position; and
a heat exchange plate 2, the heat exchange plate 2 being arranged at the bottom of the battery module 1, a flow channel 21 for circulating a working medium being arranged in the heat exchange plate 2, and the heat exchange plate 2 including a first-type region 26 opposite to the electrode position and a second-type region 27 opposite to the non-electrode position.

When the heat exchange plate 2 is configured to cool the battery module 1 through a working medium, the working medium flows from a flow channel 21 of the first-type region 26 to a flow channel 21 of the second-type region 27.

When the heat exchange plate 2 is configured to heat the battery module 1 through a working medium, the working medium flows from a flow channel 21 of the second-type region 27 to a flow channel 21 of the first-type region 26.

Specifically, the working medium in the flow channel 21 can be a refrigerant such as R123a and R32 or CO2 or water. For example, when the working medium is a refrigerant, when the heat exchange plate 2 can be configured to cool the battery module 1 through the low-temperature and low-pressure refrigerant working medium, the working medium flows from the flow channel 21 of the first-type region 26 to the flow channel 21 of the second-type region 27. When the heat exchange plate 2 is configured to heat the battery module 1 through a high-temperature and high-pressure working medium, the working medium flows from the flow channel 21 of the second-type region 27 to the flow channel 21 of the first-type region 26, to ensure that the refrigerant working medium can be in a balanced state of gas and liquid phases, so as to improve the heat exchange effect of the heat exchange plate 2 for the battery module 1 and ensure the long-term stable operation of the battery structure.

In addition, the flow channel 21 may be stamped in the heat exchange plate 2, and the battery module 1 may include multiple cells. The heat exchange plate 2 cools the battery module 1 in a forward direction (a flow direction of the working medium in the flow channel 21) and heats the battery module in a reverse direction (a flow direction of the working medium in the flow channel 21), which can improve cooling and heating operations of the battery module 1, ensure the temperature evenness of the battery module 1, and improve the heat exchange capability of the heat exchange plate 2 for the battery module 1.

Optionally, the electrode position includes a positive electrode position and a negative electrode position, and the positive electrode position and the negative electrode position are located on two opposite sides of the battery module 1 far away from each other.

Specifically, a large amount of heat is generated at a positive electrode position and a negative electrode position during the operation of the battery module 1. That is, the heat exchange plate needs to provide better cooling effect on the positive electrode position and the negative electrode position of the battery module. When the positive electrode position and the negative electrode position are located on two opposite sides of the battery module 1 far away from each other, the heat exchange plate 2 can heat and perform heat exchange for the electrodes on the two opposite sides of the battery module 1 far away from each other, to improve the heat exchange effect of the heat exchange plate 2 for the battery module 1.

Optionally, referring to FIG. 1 and FIG. 2, the first-type region 26 includes a first partition 261 and a second partition 262. The first partition 261 is opposite to the positive electrode position, and the second partition 262 is opposite to the negative electrode position.

When the heat exchange plate 2 cools the battery module 1 through the working medium, the working medium flows from the flow channel 21 of the first partition and the second partition that are far away from each other to the flow channel 21 of the second-type region 27. In this case, the working medium can be a low-temperature and low-pressure working medium. The low-temperature and low-pressure working medium first cools the positive electrode position and the negative electrode position of the battery module 1 that generate more heat, and then cools other regions of the battery module 1, to ensure the temperature evenness of the battery module 1.

When the heat exchange plate 2 is configured to heat the battery module 1 through the working medium, the working medium flows from the flow channel 21 of the second-type region 27 to the flow channel 21 of the first partition and the second partition. In this case, the working medium can be a high-temperature and high-pressure working medium, and the high-temperature and high-pressure working medium first heats regions of the battery module 1 that generate less heat other than the positive electrode position and the negative electrode position, and then heats the positive electrode position and the negative electrode position of the battery module 1, to ensure the temperature evenness of the battery module 1.

Optionally, when the heat exchange plate 2 cools the battery module 1 through the working medium, the working medium flows from the flow channel 21 of the first partition 261 to the flow channel 21 of the second partition, and flows from the flow channel 21 of the second partition 262 to the flow channel 21 of the second-type region 27.

Specifically, the working medium flowing through the first partition 261 and the second partition 262 all converges into the flow channel 21 of the second-type region 27. When a heat exchange requirement of the first partition 261 is higher than a heat exchange requirement of the second partition 262, the working medium in the first partition 261 can first flow through the second partition 262 and then flow back to the second partition 262, and the working medium in the second partition 262 can flow directly to the flow channel 21 of the second-type region 27, to improve the heat exchange flexibility of the heat exchange plate 2 in the battery structure.

Optionally, in the direction of flowing from the first-type region 26 to the second-type region 27, the number of flow channels 21 gradually increases.

Specifically, in the direction of flowing from the first-type region 26 to the second-type region 27, the number of flow channels 21 can gradually increase, for example, the number of flow channels 21 increases through diverging, so as to increase the distribution density of the flow channel 21. After the flow channel 21 diverges, the flow channel can also converge to facilitate the collection of the working medium at the inlet and outlet of the flow channel 21.

Optionally, in the direction of flowing from the first-type region 26 to the second-type region 27, the flow channel 21 includes a first channel section and a second channel section that are connected to each other. A number of channels of the second channel section is twice a number of channels of the first channel section.

Specifically, the first channel section and the second channel section can be connected through a flow diverging junction. The flow diverging junction can evenly divide the working medium in the first channel section into two second channel sections to facilitate control of balance of working medium flow amounts in the two second channel sections.

Optionally, in the direction of flowing from the first-type region 26 to the second-type region 27, the flow channel 21 further includes a third channel section, the third channel section is connected to the second channel section, and a number of channels of the third channel section is twice a number of channels of the second channel section.

Specifically, the second channel section and the third channel section can be connected through a flow diverging junction. The flow diverging junction can evenly divide the working medium in the second channel section into two third channel sections to facilitate control of balance of working medium flow amounts in the two third channel sections.

Optionally, a radial size of the cross section of the flow channel 21 ranges from 6mm to 9mm.

Specifically, a radial size of the flow channel 21 of the first-type region 26 is smaller than a radial size of the flow channel 21 of the second-type region 27.

Specifically, the flow channel 21 of the first-type region 26 can be close to the inlet and outlet of the flow channel 21, that is, the flow channel 21 of the first-type region 26 is located at a near end of the flow channel. The flow channel 21 of the second-type region 27 can be far away from the inlet and outlet of the flow channel 21, that is, the flow channel 21 of the second-type region 27 is located at a far end of the flow channel 21. To ensure the balance of the heat exchange effect between the near end and the far end of the flow channel 21, the radial size of the flow channel 21 at the far end can be gradually increased. For example, the radial size of the flow channel 21 of the first-type region 26 is set to be smaller than the radial size of the flow channel 21 of the second-type region 27.

Specifically, a radial size of the flow channel 21 of the first-type region 26 ranges from 6mm to 7.5mm, and a radial size of the flow channel 21 of the second-type region 27 ranges from 7.5mm to 9mm.

Optionally, the electrode position includes a positive electrode position and a negative electrode position, and the positive electrode position and the negative electrode position are located on the same side of the battery module 1. That is, the first partition 261 and the second partition 262 of the first-type region 26 are close to each other, and jointly perform heat exchange for the positive electrode position and the negative electrode position of the battery module.

Optionally, the heat exchange plate 2 is provided with a flow diverging component 22. The flow diverging component 22 has a first terminal 221 and a second terminal 222. The first terminal 221 and the second terminal 222 are respectively connected to two ends of the flow channel 21.

Specifically, the first terminal 221 and the second terminal 222 can be configured to connect the heat exchange plate 2 to an external component that provides a working medium. For example, an external pump can be connected to the heat exchange plate 2 through the first terminal 221 and the second terminal 222, to ensure the flow stability of the working medium in the heat exchange plate 2.

Optionally, the first terminal 221 is connected to the flow channel 21 of the first-type region 26, and the second terminal 222 is connected to the flow channel 21 of the second-type region 27.

Specifically, the two ends of the flow channel 21 may be a first flow converging end and a second flow converging end. For example, the first flow converging end and the second flow converging end can be used as end structures configured to plug or threadedly connect the two ends of the flow channel 21 to the first terminal 221 and the second terminal 222 respectively. The flow channel 21 in the heat exchange plate extends from the first flow converging end to the second flow converging end through the flow channels 21 of the first-type region 26 and the second-type region 27 after changing a direction at least once, to improve the distribution density of the flow channel 21 in the heat exchange plate. For example, the flow channel 21 is distributed in a zigzag or serpentine shape in the heat exchange plate, to ensure the distribution density of the flow channel 21 in the heat exchange plate, thereby improving the heat exchange effect of the heat exchange plate.

Optionally, referring to FIG. 6 and FIG. 12, the battery module 1 includes a first battery module 11 and a second battery module 12. The second battery module 12 is located on a side of the first battery module 11 away from the flow diverging component 22.

A flow amount of a channel in the flow channel 21 that is opposite to the first battery module 11 is a first flow amount, and a flow amount of a channel in the flow channel 21 that is opposite to the second battery module 12 is the second flow amount. The first flow amount is less than the second flow amount.

Specifically, when the second battery module 12 is located on a side of the first battery module 11 away from the flow diverging component 22, specifically, the flow channel 21 of the first-type region 26 may be opposite to the first battery module 11 and may be close to the flow diverging component 22, that is, the flow channel 21 of the first-type region 26 is located at a near end of the heat exchange plate 2. The flow channel 21 of the second-type region 27 can be far away from the flow diverging component 22, that is, the flow channel 21 of the second-type region 27 is located at a far end of the heat exchange plate 2. To ensure the balanced heat exchange effect of the near end and the far end of the heat exchange plate 2, a flow amount of the flow channel 21 at the far end can be increased, for example, a flow amount of a channel in the flow channel 21 opposite to the second battery module 12 is set to a second flow amount, and a first flow amount is smaller than the second flow amount.

**In** addition, the two sets of batteries formed by the first battery module 11 and the second battery module 12 can charge and discharge each other after being connected through coils of a motor, that is, the temperatures of the batteries are increased by self-heating, so that the batteries can perform better charge and discharge.

**In** a specific embodiment, an average radial size of the channel in the flow channel 21 that is opposite to the first battery module 11 is smaller than an average radial size of the channel in the flow channel 21 that is opposite to the second battery module 12.

**In** addition, a number of channels in the flow channel 21 that face the first battery module 11 may also be set to be smaller than a number of channels in the flow channel 21 that face the second battery module 12.

Optionally, the flow channel 21 includes a first-type flow channel 25 located on the outer periphery of the flow channel 21, and the first-type flow channel 25 is located outside the projection of the battery module 1 on the heat exchange plate 2.

The flow amount of the first-type flow channel 25 is 20% to 25% of the total flow amount of the flow channel 21, the first flow amount is 30% to 40% of the total flow amount of the flow channel 21, and the second flow amount is 40% to 50% of the total flow amount of the flow channel 21.

Specifically, two ends of the first-type flow channel 25 are directly connected to the trunk of the flow channel. Because the trunk of the flow channel 21 is a part of the flow channel that is directly connected to the first flow converging end and the second flow converging end and has not been diverged or converged, the arrangement of the first-type flow channel 25 can simplify the flow channel of the working medium in the first-type flow channel 25 and avoid excessive heating and cooling of the first flow converging end and the second flow converging end, to ensure the temperature balance of the flow channel 21 during heat exchange.

Optionally, the heat exchange plate 2 includes a third region located between the first-type region 26 and the second-type region 27.

Specifically, when the heat exchange plate 2 performs heat exchange for the battery module 1, the first-type region 26 and the second-type region 27 can correspond to the positive electrode position and the negative electrode position of the battery module 1, and the third region can correspond to a non-electrode position in the middle of the battery module or a gap position between cells in the battery module. To cause the heat exchange plate 2 to increase heat exchange efficiency for the positive electrode position and the negative electrode position of the battery module 1 and reduce the heat exchange efficiency for the position of the battery module 1 corresponding to the third region, the following two embodiments can be implemented.

In an embodiment, the density of the flow channels 21 in the first-type region 26 is greater than the density of the flow channels 21 in the third region.

In another embodiment, the density of the flow channels 21 in the second-type region 27 is greater than the density of the flow channels 21 in the third region.

Optionally, the heat exchange plate 2 includes a base plate 23 and a flow channel plate 24. The base plate 23 is sandwiched between the flow channel plate 24 and the battery module 1. The flow channel 21 is arranged on the flow channel plate 24.

An embodiment of the present disclosure further provides a vehicle, including the above battery structure.

Although some specific embodiments of the present disclosure have been described in detail through examples, persons skilled in the art shall understand that the above examples are for illustration only and are not intended to limit the scope of the present disclosure. Persons skilled in the art shall understand that the above embodiments can be modified without departing from the scope and spirit of the present disclosure. The scope of the present disclosure is subject only to the appended claims.

## Claims

1. A heat exchange plate, applied to a battery, comprising:
a heat exchange region (203) and a battery region (204), the heat exchange region being arranged around the battery region, and the battery region being a battery projection region of the battery on the heat exchange plate; and
a flow channel (21), the flow channel (21) being arranged in the heat exchange plate, the flow channel being configured to allow a heat exchange working medium to flow therein, and the flow channel comprising a first-type flow channel (100) and a second-type flow channel;
the first-type flow channel (100) being located in the heat exchange region (203), and the second-type flow channel being distributed in the battery region (204).

2. The heat exchange plate according to claim 1, wherein a length of the first-type flow channel is less than a length of the second-type flow channel, and/or a number of diverging times of the first-type flow channel is less than a number of diverging times of the second-type flow channel.

3. The heat exchange plate according to claim 1 or 2, wherein
the heat exchange plate further comprises a first terminal (221) and a second terminal (222);
one end of the first-type flow channel is connected to the first terminal (221), and another end of the first-type flow channel is connected to the second terminal; and
one end of the second-type flow channel is connected to the first terminal (221), and another end of the second-type flow channel is connected to the second terminal (222).

4. The heat exchange plate according to claim 3, wherein the first-type flow channel (100) diverges at least once and diverges at most four times when extending from the first terminal (221) to the second terminal (222).

5. The heat exchange plate according to claim 3 or 4, wherein the second-type flow channel diverges at least twice and diverges at most six times when extending from the first terminal (221) to the second terminal (222).

6. The heat exchange plate according to any one of claims 3 to 5, wherein the flow channel comprises a plurality of trunks, a plurality of stages of branches, and a plurality of stages of flow diverging/converging junctions, and the flow diverging/converging junction diverges or converges the flow channel according to a flow direction of the working medium;
the trunk comprises a plurality of first trunks (31) and second trunks (41), the first trunk (31) is connected to the first terminal (221), and the second trunk (41) is connected to the second terminal (222);
one of the first trunks (31) passes through a first-stage flow diverging/converging junction (2121) to form two first-stage branches (101), one first-stage branch (101) passes through a second-stage flow diverging/converging junction (2122) to form two second-stage branches (102) and extend into the heat exchange region (203), and the two second-stage branches (102) serve as the first-type flow channel (100); and
one end of the two second-stage branches (102) away from the first trunk (31) is connected to one of the second trunks (41) through flow converging.

7. The heat exchange plate according to claim 6, wherein another first-stage branch (101) formed after one of the first trunks (31) passes through the first-stage flow diverging/converging junction (2121) extends into the battery region (204), and the first-stage branch (101) and the branch formed after the first-stage branch passes through the flow diverging/converging junction are the second-type flow channel.

8. The heat exchange plate according to claim 6, wherein the second-stage branch (102) serving as the first-type flow channel passes through the second-stage flow diverging/converging junction (2122) in a position close to the second trunk (41) to form the first-stage branch (101), the first-stage branch (101) and another first-stage branch (101) serving as the second-type flow channel are connected to one of the second trunks (41) through the first-stage flow diverging/converging junction (2121), and the first-stage flow diverging/converging junction (2121) and the second-stage flow diverging/converging junction (2122) are arranged adjacent to each other.

9. The heat exchange plate according to claim 8, wherein in a position close to the second trunk (41), the second-stage flow diverging/converging junction (2122) connected to the second-stage branch (102) serving as the first-type flow channel and the second-stage flow diverging/converging junction (2122) connected to the second-stage branch (102) serving as the second-type flow channel are arranged adjacent to each other.

10. The heat exchange plate according to any one of claims 1 to 9, comprising a first-type region (26) and a second-type region (27); the flow channel (21) being distributed in the first-type region (26) and the second-type region (27); and
the heat exchange plate (2) being configured to cool the battery, and the working medium flowing from a flow channel (21) of the first-type region (26) to a flow channel (21) of the second-type region (27); or
the heat exchange plate (2) being configured to heat the battery, and the working medium flowing from a flow channel (21) of the second-type region (27) to a flow channel (21) of the first-type region (26).

11. The heat exchange plate according to claim 10, wherein the first-type region (26) comprises a first partition (261) and a second partition (262); and
when the heat exchange plate (2) is configured to cool the battery, the working medium diverges at least twice in a process of flowing from the first partition (261) to the second-type region (27).

12. The heat exchange plate according to claim 11, wherein the first partition (261) of the first-type region (26) comprises a second sub-region (2612), and the second partition (262) of the first-type region (26) comprises a second sub-zone (2622); and
the second-type region comprises a second partition region (272), and the second partition region (272) is located between the second sub-zone (2622) and the second sub-region (2612).

13. The heat exchange plate according to any one of claims 1 to 12, wherein the heat exchange plate has a first region and a second region, the flow channel is distributed in the first region (28) and the second region (29), and average distribution density of the flow channel (21) in the first region (28) is greater than average distribution density of the flow channel (21) in the second region (29).

14. The heat exchange plate according to any one of claims 1 to 13, wherein the heat exchange plate comprises a flow channel plate and a base plate, the flow channel is arranged on the flow channel plate, and in a plane where the heat exchange plate is located, an area for arranging the flow channel is larger than 70% of an area of the flow channel plate (24).

15. The heat exchange plate according to any one of claims 1 to 14, wherein a width of the flow channel (21) is less than 15mm.

16. A battery pack, comprising:
the heat exchange plate according to any one of claims 1 to 15; and
a battery module, the heat exchange plate covering the battery module, and the battery module being located in a position corresponding to the battery region.

17. The battery pack according to claim 16, wherein the battery module comprises a first module and a second module, the first module and the second module are arranged side by side, and the heat exchange region of the heat exchange plate surrounds the entire periphery of the first module and the second module.

18. A vehicle, comprising the heat exchange plate according to any one of claims 1 to 15; or comprising the battery pack according to claim 16 or 17.
